(19) Europäisches Patentamt
European Patent Office
Office européen des brevets

(11) **EP 4 661 478 A1**

## EUROPEAN PATENT APPLICATION
published in accordance with Art. 153(4) EPC

(43) Date of publication:
**10.12.2025 Bulletin 2025/50**

(21) Application number: **24755873.7**

(22) Date of filing: **16.01.2024**

(51) International Patent Classification (IPC):
**H04W 24/10** (2009.01)

(52) Cooperative Patent Classification (CPC):
**G06N 3/04; H04W 24/10**

(86) International application number:
**PCT/CN2024/072617**

(87) International publication number:
**WO 2024/169498 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 CN 202310160189**

(71) Applicant: **Huawei Technologies Co., Ltd.
Shenzhen, Guangdong 518129 (CN)**

(72) Inventors:
• **LIU, Lifu
Shenzhen, Guangdong 518129 (CN)**

• **XUE, Songyan
Shenzhen, Guangdong 518129 (CN)**
• **CHEN, Hongzhi
Shenzhen, Guangdong 518129 (CN)**
• **SUN, Yan
Shenzhen, Guangdong 518129 (CN)**
• **CHAI, Xiaomeng
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57)    Embodiments of this application provide a communication method and apparatus, to reduce redundant overheads in a measurement process and improve communication efficiency. In the method, after a terminal obtains a measurement result of an RS through measurement by using a first RS resource set, the terminal may perform prediction on the measurement result of the RS by using a neural network model, to determine a candidate RS resource set that belongs to a second RS resource set. In this case, the terminal may further select a target RS resource set from the candidate RS resource set as a finally reported RS resource, to reduce redundant overheads in a measurement process and improve communication efficiency.

```
Terminal                                    Network device

S801: Measure an RS from the network device by using a first RS resource set,
to obtain a measurement result of the RS

S802: Input the measurement result of the
RS into a neural network model, to
determine a target RS resource set

                S803: Information about the
                target RS resource set
```

FIG. 8

## Description

This application claims priority to Chinese Patent Application No. 202310160189.X, filed with the China National Intellectual Property Administration on February 16, 2023 and entitled "COMMUNICATION METHOD AND APPARATUS", which is incorporated herein by reference in its entirety.

## TECHNICAL FIELD

This application relates to the field of wireless communication, and in particular, to a communication method and apparatus.

## BACKGROUND

A 3rd generation partnership project (3rd generation partnership project, 3GPP) protocol introduces a signal transmission mechanism that is based on a beamforming technology. In this transmission mechanism, beam management is required to implement alignment between a transmission beam and a reception beam. For example, a network device may send reference signals to a terminal at a plurality of moments by using different beams. The terminal may determine an optimal beam, for example, an optimal transmission beam and/or an optimal reception beam, by measuring the reference signal. Sending and receiving reference signals requires high air interface overheads. Therefore, a possible solution is that the terminal presets an optimal beam through a neural network. For example, the network device may send reference signals by using only a few beams. The terminal obtains measurement results by measuring the reference signals, and may input the measurement results into the neural network, to predict a possible optimal beam. In this way, a quantity of measurement times can be reduced, thereby reducing air interface overheads.

However, the preset optimal beam of the neural network may be different from an actual optimal beam. As a result, redundant overheads may exist in a measurement process, and consequently communication efficiency is affected.

## SUMMARY

Embodiments of this application provide a communication method and apparatus, to reduce redundant overheads in a measurement process and improve communication efficiency.

To achieve the foregoing objectives, the following technical solutions are used in embodiments of this application.

According to a first aspect, a communication method is provided. The method includes: A terminal measures an RS from a network device by using a first reference signal RS resource set, to obtain a measurement result of the RS; and inputs the measurement result into a neural network model, to determine a target RS resource set. The target RS resource set is determined from a candidate RS resource set, the candidate RS resource set is determined by the neural network model based on the measurement result, and the candidate RS resource set belongs to a second RS resource set. An RS transmitted by using the first RS resource set is the same as or different from an RS transmitted by using the second RS resource set.

It can be learned from the method according to the first aspect that, after the terminal obtains the measurement result of the RS through measurement by using the first RS resource set, the terminal may perform prediction on the measurement result of the RS by using the neural network model, to determine the candidate RS resource set that belongs to the second RS resource set. In this case, the terminal may further select the target RS resource set from the candidate RS resource set as a finally reported RS resource, to reduce redundant overheads in a measurement process and improve communication efficiency.

In a possible design solution, the target RS resource set is determined from the candidate RS resource set based on a first threshold and information about the candidate RS resource set. The first threshold is related to the information about the candidate RS resource set. For example, the first threshold may be set based on an information type of the candidate RS resource set (for details, refer to the related description below), so that a redundant RS in the candidate RS resource set can be more accurately screened out.

Optionally, that the candidate RS resource set is determined by the neural network model based on the measurement result of the RS is specifically as follows: The information about the candidate RS resource set is determined by the neural network model based on the measurement result of the RS. The information about the candidate RS resource set may be used to represent that an RS resource in the candidate RS resource set may be used as an optimal RS resource, or a possibility that an RS resource in the candidate RS resource set is used as an optimal RS resource. In other words, a possible optimal RS resource may be predicted by using the neural network model, to reduce beam management overheads.

Optionally, the information about the candidate RS resource set may include at least one of the following: a probability that each RS resource in the candidate RS resource set is an optimal RS resource, signal quality of each RS resource in the candidate RS resource set, or an angle of each RS resource in the candidate RS resource set. The angle of each RS resource in the candidate RS resource set is an angle difference between a transmission beam and a reception beam that correspond to the RS resource.

It can be learned from the foregoing description that, in some cases, a probability of the optimal RS resource may explicitly indicate a possibility that the RS resource is used as an optimal RS resource, and the network device can perform effective resource scheduling or configuration based on the probability, to avoid redundant overheads. In some other cases, the terminal needs to report the signal quality of the RS resource, for example, an RSRP, to the network device. Therefore, the signal quality of the RS resource is reused to implicitly indicate that the RS resource may be used as an optimal RS resource, to reduce reporting overheads. In other cases, the angle of the RS resource may also explicitly indicate a possibility that the RS resource is used as an optimal RS resource. In this way, the network device can also perform effective resource scheduling or configuration based on the angle, to avoid redundant overheads.

Further, information about the target RS resource set and the first threshold meet at least one of the following relationships: A probability that an RS resource in the target RS resource set is an optimal RS resource is greater than a probability represented by the first threshold, signal quality of an RS resource in the target RS resource set is greater than signal quality represented by the first threshold, or an angle of each RS resource in the RS resource set is less than an angle represented by the first threshold. In other words, an RS resource that is most likely to be used as an optimal RS resource can be selected from the candidate RS resource set based on the first threshold, to avoid redundant overheads.

Optionally, the method according to the first aspect may further include: The terminal receives indication information from the network device, where the indication information indicates the first threshold. In other words, the first threshold may be flexibly configured by a network side according to an actual requirement.

Optionally, the first threshold may alternatively be pre-configured in the neural network model, or may be pre-configured locally on the terminal, to avoid unnecessary overheads caused because the network side separately configures the first threshold.

In a possible design solution, the method according to the first aspect may further include: The terminal sends the information about the target RS resource set to the network device, so that the network device determines which RS resources can be used as optimal RS resources. For example, the information about the target RS resource set includes at least one of the following: an identifier of the RS resource in the target RS resource set, the signal quality of the RS resource in the target RS resource set, or the angle of each RS resource in the RS resource set. The angle of each RS resource in the target RS resource set is an angle difference between a transmission beam and a reception beam that correspond to the RS resource. Specifically, in one case, the information about the target RS resource set may include the identifier and the signal quality of the RS resource, to jointly indicate which RS resources may be used as optimal RS resources. Alternatively, in another case, the information about the target RS resource set may include the angle of the RS resource. In this way, the network device may also determine, based on only the angle of the RS resource, that the RS resource may be used as an optimal RS resource.

In a possible design solution, there are a plurality of target RS resource sets, and the plurality of target RS resource sets may be separately configured in different time units for use, to ensure that an optimal RS resource can be used for air interface transmission in each time unit, thereby ensuring stability and reliability of air interface transmission.

According to a second aspect, a communication method is provided. The method includes: A network device sends an RS to a terminal by using a first reference signal RS resource set, and receives a measurement result that is of the RS and that is fed back by the terminal; and the network device inputs the measurement result into a neural network model, to determine a target RS resource set. The target RS resource set is determined from a candidate RS resource set, the candidate RS resource set is determined by the neural network model based on the measurement result, the candidate RS resource set belongs to a second RS resource set, and an RS transmitted by using the first RS resource set is the same as or different from an RS transmitted by using the second RS resource set.

It can be learned from the method according to the second aspect that, after the terminal obtains the measurement result of the RS through measurement by using the first RS resource set, the terminal may directly report the measurement result to the network device. In this way, the network device may perform prediction on the measurement result of the RS by using the neural network model, to determine the candidate RS resource set that belongs to the second RS resource set, to further select the target RS resource set from the candidate RS resource set as a finally reported RS resource, thereby reducing redundant overheads in a measurement process and improving communication efficiency.

In a possible design solution, the target RS resource set is determined from the candidate RS resource set based on a first threshold and information about the candidate RS resource set, and the first threshold is related to the information about the candidate RS resource set.

Optionally, that the candidate RS resource set is determined by the neural network model based on the measurement result is specifically as follows: The information about the candidate RS resource set is determined by the neural network model based on the measurement result.

Further, the information about the candidate RS resource set includes at least one of the following: a probability that each RS resource in the candidate RS resource set is an optimal RS resource, signal quality of each RS resource in the candidate RS resource set, or an angle of each RS resource in the candidate RS resource set. The angle of each RS resource in the candidate RS resource set is an angle difference between a transmission beam and a reception beam that correspond to the RS resource.

Further, information about the target RS resource set and the first threshold meet at least one of the following relationships: A probability that an RS resource in the target RS resource set is an optimal RS resource is greater than a probability represented by the first threshold, signal quality of an RS resource in the target RS resource set is greater than signal quality represented by the first threshold, or an angle of each RS resource in the RS resource set is less than an angle represented by the first threshold.

Optionally, the first threshold may be pre-configured in the neural network model.

In a possible design solution, the method according to the second aspect may further include: The network device sends the target RS resource set to the terminal.

In a possible design solution, there are a plurality of target RS resource sets, and the plurality of target RS resource sets are configured in different time units for use.

In a possible design solution, the measurement result of the RS is all measurement results or a part of measurement results. In other words, the terminal may choose to report only a part of measurement results, to reduce overheads.

In addition, for technical effects of the method according to the second aspect, refer to the technical effects of the method according to the first aspect. Details are not described herein again.

According to a third aspect, a communication method is provided. The method includes: A terminal measures an RS from a network device by using a first reference signal RS resource set, to obtain a measurement result of the RS; and inputs the measurement result into a neural network model, to determine a target RS resource set group. The target RS resource set group includes a first target RS resource set corresponding to a first time unit and a second target RS resource set corresponding to a second time unit, and the first time unit is different from the second time unit. The first target RS resource set is determined from a first candidate RS resource set, and the second target RS resource set is determined from a second candidate RS resource set. The first candidate RS resource set and the second candidate RS resource set are determined by the neural network model based on the measurement result, and both the first candidate RS resource set and the second candidate RS resource set belong to a second RS resource set. An RS transmitted by using the first RS resource set is the same as or different from an RS transmitted by using the second RS resource set.

In a possible design solution, the first target RS resource set corresponding to the first time unit means that the first target RS resource set is configured in the first time unit for use.

In a possible design solution, the second target RS resource set corresponding to the second time unit means that the second target RS resource set is configured in the second time unit for use.

In a possible design solution, the first target RS resource set is determined from the first candidate RS resource set based on a first threshold and information about the first candidate RS resource set, and the first threshold is related to the information about the first candidate RS resource set.

Optionally, that the first candidate RS resource set is determined by the neural network model based on the measurement result of the RS is specifically as follows: The information about the first candidate RS resource set is determined by the neural network model based on the measurement result of the RS.

Optionally, the information about the first candidate RS resource set includes at least one of the following: a probability that each RS resource in the first candidate RS resource set is an optimal RS resource, signal quality of each RS resource in the first candidate RS resource set, or an angle of each RS resource in the first candidate RS resource set. The angle of each RS resource in the first candidate RS resource set is an angle difference between a transmission beam and a reception beam that correspond to the RS resource.

Further, information about the first target RS resource set and the first threshold meet at least one of the following relationships: A probability that an RS resource in the first target RS resource set is an optimal RS resource is greater than a probability represented by the first threshold, signal quality of an RS resource in the first target RS resource set is greater than signal quality represented by the first threshold, or an angle of each RS resource in the first RS resource set is less than an angle represented by the first threshold.

Optionally, the method according to the third aspect may further include: The terminal receives first indication information from the network device, where the first indication information indicates the first threshold.

Optionally, the first threshold may alternatively be pre-configured in the neural network model, or may be pre-configured locally in the terminal.

In a possible design solution, the method according to the third aspect may further include: The terminal sends the information about the first target RS resource set to the network device. For example, the information about the first target RS resource set includes at least one of the following: an identifier of the RS resource in the first target RS resource set, the signal quality of the RS resource in the first target RS resource set, or the angle of each RS resource in the first RS resource set. The angle of each RS resource in the first target RS resource set is an angle difference between a transmission beam and a reception beam that correspond to the RS resource.

In a possible design solution, the second target RS resource set is determined from the second candidate RS resource set based on a second threshold and information about the second candidate RS resource set, and the second threshold is related to the information about the second candidate RS resource set.

Optionally, that the second candidate RS resource set is determined by the neural network model based on the measurement result of the RS is specifically as follows: The information about the second candidate RS resource set is determined by the neural network model based on the measurement result of the RS.

Optionally, the information about the second candidate RS resource set includes at least one of the following: a probability that each RS resource in the second candidate RS resource set is an optimal RS resource, signal quality of each RS resource in the second candidate RS resource set, or an angle of each RS resource in the second candidate RS resource set. The angle of each RS resource in the candidate RS resource set is an angle difference between a transmission beam and a reception beam that correspond to the RS resource.

Optionally, the method according to the third aspect may further include: The terminal receives second indication information from the network device, where the second indication information indicates the second threshold.

Optionally, the second threshold may alternatively be pre-configured in the neural network model, or may be pre-configured locally in the terminal.

In a possible design solution, the method according to the third aspect may further include: The terminal sends information about the second target RS resource set to the network device. For example, the information about the second target RS resource set includes at least one of the following: an identifier of an RS resource in the second target RS resource set, signal quality of an RS resource in the second target RS resource set, or an angle of each RS resource in the second RS resource set. The angle of each RS resource in the second target RS resource set is an angle difference between a transmission beam and a reception beam that correspond to the RS resource.

In addition, for technical effects of the method according to the third aspect, refer to the technical effects of the method according to the first aspect. Details are not described herein again.

According to a fourth aspect, a communication method is provided. The method includes: A network device sends an RS to a terminal by using a first reference signal RS resource set, and receives a measurement result that is of the RS and that is fed back by the terminal; and the network device inputs the measurement result into a neural network model, to determine a target RS resource set group. The target RS resource set group includes a first target RS resource set corresponding to a first time unit and a second target RS resource set corresponding to a second time unit, and the first time unit is different from the second time unit. The first target RS resource set is determined from a first candidate RS resource set, and the second target RS resource set is determined from a second candidate RS resource set. The first candidate RS resource set and the second candidate RS resource set are determined by the neural network model based on the measurement result, and both the first candidate RS resource set and the second candidate RS resource set belong to a second RS resource set. An RS transmitted by using the first RS resource set is the same as or different from an RS transmitted by using the second RS resource set.

In a possible design solution, the first target RS resource set corresponding to the first time unit means that the first target RS resource set is configured in the first time unit for use.

In a possible design solution, the second target RS resource set corresponding to the second time unit means that the second target RS resource set is configured in the second time unit for use.

In a possible design solution, the first target RS resource set is determined from the first candidate RS resource set based on a first threshold and information about the first candidate RS resource set, and the first threshold is related to the information about the first candidate RS resource set.

Optionally, that the first candidate RS resource set is determined by the neural network model based on the measurement result of the RS is specifically as follows: The information about the first candidate RS resource set is determined by the neural network model based on the measurement result of the RS.

Further, the information about the first candidate RS resource set includes at least one of the following: a probability that each RS resource in the first candidate RS resource set is an optimal RS resource, signal quality of each RS resource in the first candidate RS resource set, or an angle of each RS resource in the first candidate RS resource set. The angle of each RS resource in the first candidate RS resource set is an angle difference between a transmission beam and a reception beam that correspond to the RS resource.

Further, information about the first target RS resource set and the first threshold meet at least one of the following relationships: A probability that an RS resource in the first target RS resource set is an optimal RS resource is greater than a probability represented by the first threshold, signal quality of an RS resource in the first target RS resource set is greater than signal quality represented by the first threshold, or an angle of each RS resource in the first RS resource set is less than an angle represented by the first threshold.

Optionally, the first threshold may be pre-configured in the neural network model.

In a possible design solution, the method according to the second aspect may further include: The network device sends the first target RS resource set to the terminal.

In a possible design solution, the second target RS resource set is determined from the second candidate RS resource set based on a second threshold and information about the second candidate RS resource set, and the second threshold is related to the information about the second candidate RS resource set.

Optionally, that the second candidate RS resource set is determined by the neural network model based on the measurement result of the RS is specifically as follows: The information about the second candidate RS resource set is determined by the neural network model based on the measurement result of the RS.

Further, the information about the second candidate RS resource set includes at least one of the following: a probability that each RS resource in the second candidate RS resource set is an optimal RS resource, signal quality of each RS resource in the second candidate RS resource set, or an angle of each RS resource in the second candidate RS resource set. The angle of each RS resource in the second candidate RS resource set is an angle difference between a transmission beam and a reception beam that correspond to the RS resource.

Further, information about the second target RS resource set and the second threshold meet at least one of the following relationships: A probability that an RS resource in the second target RS resource set is an optimal RS resource is greater than a probability represented by the second threshold, signal quality of an RS resource in the second target RS resource set is greater than signal quality represented by the second threshold, or an angle of each RS resource in the second RS resource set is less than an angle represented by the second threshold.

Optionally, the second threshold may be preconfigured in the neural network model.

In a possible design solution, the method according to the second aspect may further include: The network device sends the second target RS resource set to the terminal.

In a possible design solution, the measurement result of the RS is all measurement results or a part of measurement results.

In addition, for technical effects of the method according to the fourth aspect, refer to the technical effects of the method according to the second aspect. Details are not described herein again.

According to a fifth aspect, a communication apparatus is provided. The communication apparatus includes modules configured to perform the method according to the first aspect or the third aspect, for example, the transceiver module and the processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus may be enabled to perform the method according to the first aspect or the third aspect.

It may be understood that the communication apparatus according to the fifth aspect may be a terminal, or may be a chip (system) or another part or component that may be disposed in a terminal, or may be an apparatus including a terminal. This is not limited in this application.

In addition, for technical effects of the communication apparatus according to the fifth aspect, refer to the technical effects of the method according to the first aspect. Details are not described herein again.

According to a sixth aspect, a communication apparatus is provided. The communication apparatus includes modules configured to perform the method according to the second aspect or the fourth aspect, for example, the transceiver module and the processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus may be enabled to perform the method according to the second aspect or the fourth aspect.

It may be understood that the communication apparatus according to the sixth aspect may be a network device, or may be a chip (system) or another part or component that may be disposed in a terminal, or may be an apparatus including a terminal. This is not limited in this application.

In addition, for technical effects of the communication apparatus according to the sixth aspect, refer to the technical effects of the method according to the second aspect. Details are not described herein again.

According to a seventh aspect, a communication apparatus is provided. The communication apparatus includes a processor. The processor is configured to perform the method according to any one of the possible implementations of the first aspect to the fourth aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design solution, the communication apparatus according to the seventh aspect may further include a memory. The memory may be integrated with the processor, or may be separately disposed. The memory may be configured to store a computer program and/or data related to the method according to any one of the first aspect to the fourth aspect.

In embodiments of this application, the communication apparatus according to the seventh aspect may be the device according to any one of the first aspect to the fourth aspect, or a chip (system) or another part or component that may be disposed in the device, or an apparatus including the device.

In addition, for technical effects of the communication apparatus according to the seventh aspect, refer to the technical effects of the method according to any one of the implementations of the first aspect to the fourth aspect. Details are not described herein again.

According to an eighth aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect to the fourth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be the device according to any one of the first aspect to the fourth aspect, or a chip (system) or another part or component that may be disposed in the device, or an apparatus including the device.

In addition, for technical effects of the communication apparatus according to the eighth aspect, refer to the technical effects of the method according to any one of the implementations of the first aspect to the fourth aspect. Details are not described herein again.

According to a ninth aspect, a communication apparatus is provided, and includes a processor and a memory. The memory is configured to store a computer program. When the processor executes the computer program, the communication apparatus is enabled to perform the method according to any one of the implementations of the first aspect to the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In embodiments of this application, the communication apparatus according to the ninth aspect may be the device according to any one of the first aspect to the fourth aspect, or a chip (system) or another part or component that may be disposed in the device, or an apparatus including the device.

In addition, for technical effects of the communication apparatus according to the ninth aspect, refer to the technical effects of the method according to any one of the implementations of the first aspect to the fourth aspect. Details are not described herein again.

According to a tenth aspect, a communication system is provided. The communication system includes a terminal and a network device. The terminal is configured to perform the method according to the first aspect, and the network device is configured to perform the method according to the second aspect; or the terminal is configured to perform the method according to the third aspect, and the network device is configured to perform the method according to the fourth aspect.

According to an eleventh aspect, a computer-readable storage medium is provided, and includes a computer program or instructions. When the computer program or the instructions are run on a computer, the computer is enabled to perform the method according to any one of the possible implementations of the first aspect to the fourth aspect.

According to a twelfth aspect, a computer program product is provided, and includes a computer program or instructions. When the computer program or the instructions are run on a computer, the computer is enabled to perform the method according to any one of the possible implementations of the first aspect to the fourth aspect.

**BRIEF DESCRIPTION OF DRAWINGS**

FIG. 1 is a diagram of a beam;
FIG. 2 is a diagram of an application scenario of hierarchical sweeping;
FIG. 3 is a diagram of a neuron;
FIG. 4 is a diagram of a structure of a DNN;
FIG. 5 is a diagram of an application scenario of beam management;
FIG. 6 is a diagram 1 of an architecture of a communication system according to an embodiment of this application;

FIG. 7 is a diagram 2 of an architecture of a communication system according to an embodiment of this application;

FIG. 8 is a schematic flowchart 1 of a communication method according to an embodiment of this application;

FIG. 9 is a schematic flowchart 2 of a communication method according to an embodiment of this application;

FIG. 10 is a diagram 1 of a structure of a communication apparatus according to an embodiment of this application; and

FIG. 11 is a diagram 2 of a structure of a communication apparatus according to an embodiment of this application.

## DESCRIPTION OF EMBODIMENTS

For ease of understanding of technical solutions provided in embodiments of this application, technologies related to this application are first described briefly. The brief descriptions are as follows.

1. Beam:

With development of a 5th generation (5th generation, 5G) mobile communication system, a used spectrum gradually evolves to a high frequency band. Due to physical transmission characteristics, a free space transmission loss and a penetration loss of the high frequency band are significantly higher than those of a low frequency band. To compensate for the foregoing disadvantage, a transmitter or a receiver of a network device or a terminal concentrates energy in a narrow range through an antenna array, to form special directional sending or receiving effects, namely, a beam, which is similar to a light beam formed by converging light to a direction by using a flashlight. Sending and receiving a signal in a form of a beam can effectively resist signal attenuation caused by a loss, and effectively increase a signal transmission distance, thereby effectively improving network coverage and increasing a user experience rate.

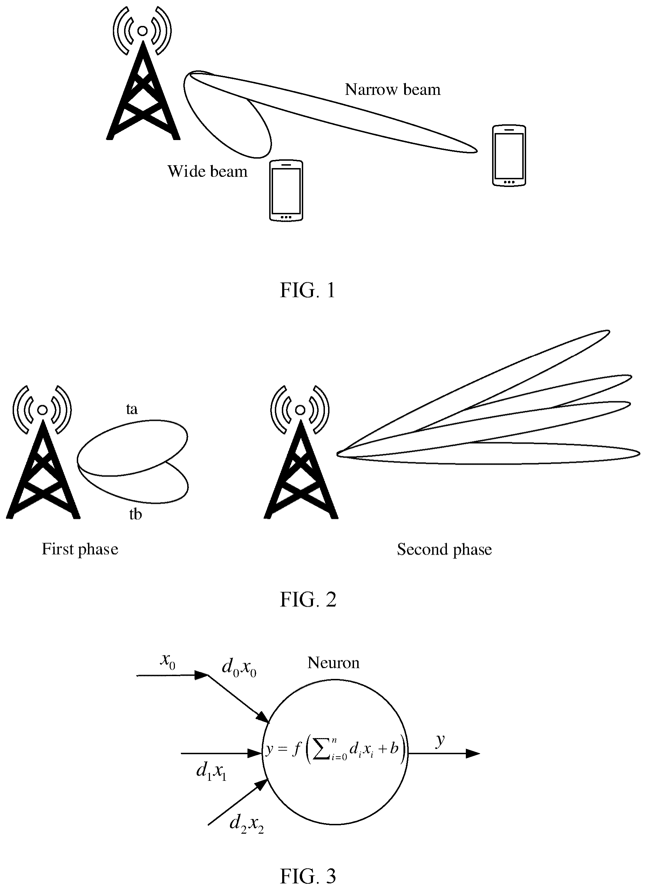

The beam may be a wide beam, a narrow beam, or another type of beam. As shown in FIG. 1, the wide beam means that limited transmission energy is focused in a wide direction, to balance a transmission distance and a coverage width of the beam. The narrow beam means that limited transmission energy is focused in a narrow direction, to further increase a transmission distance of the beam. A technology for forming the beam may be a beamforming technology or another technology. The beamforming technology may be specifically a digital beamforming technology, an analog beamforming technology, a hybrid digital/analog beamforming technology, or the like.

The beam generally corresponds to a resource. For example, during beam measurement, the network device measures different beams by using different resources, and the terminal feeds back measured resource quality, so that the network device can know quality of a corresponding beam. During data transmission, the beam may also be indicated by using the resource corresponding to the beam. For example, the network device indicates a transmission configuration indicator-state (state) by using a transmission configuration index (transmission configuration index, TCI) field in downlink control information (downlink control information, DCI), and the terminal determines, based on a reference resource included in the TCI-state, a beam corresponding to the reference resource.

In a communication protocol, the beam may be specifically represented as a digital beam, an analog beam, a spatial domain filter (spatial domain filter), a spatial filter (spatial filter), a spatial parameter (spatial parameter), a TCI, a TCI-state, or the like. A beam used to send a signal may be referred to as a transmission beam (transmission beam, or Tx beam), a spatial domain transmission filter (spatial domain transmission filter), a spatial transmission filter (spatial transmission filter), a spatial domain transmission parameter (spatial domain transmission parameter), a spatial transmission parameter (spatial transmission parameter), or the like. A beam used to receive a signal may be referred to as a reception beam (reception beam, or Rx beam), a spatial domain reception filter (spatial domain reception filter), a spatial reception filter (spatial reception filter), a spatial domain reception parameter (spatial domain reception parameter), a spatial reception parameter (spatial reception parameter), or the like.

It may be understood that embodiments of this application are uniformly described by using the beam, but the beam may be replaced with and understood as another equivalent concept, and is not limited to the foregoing mentioned concepts.

2. Resource:

In a communication protocol, a reference signal is configured in a form of the resource. A network device configures each reference signal for a terminal in the form of the resource. One resource is a configuration information unit, and usually includes a parameter related to a reference signal, for example, a time frequency resource position, a quantity of ports, and a time domain type (periodic/semi-static/aperiodic) of the reference signal.

The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal may include but is not limited to a channel state information reference signal (channel state information reference signal, CSI-RS), a cell-specific reference signal (cell-specific reference signal, CS-RS), a UE-specific reference signal (user equipment-specific reference signal, US-RS), a demodulation reference signal (demodulation reference signal, DMRS), and a synchronization signal/physical broadcast channel block (synchronization signal /physical broadcast channel block, SS/PBCH block). The SS/PBCH block may be referred to as a synchronization signal block (synchronization signal block, SSB) for short.

The resource may be configured by using a radio resource control (radio resource control, RRC) message. In terms of a configuration structure, one resource is one data structure, and includes a related parameter of an uplink/downlink signal corresponding to the resource, for example, a type of the uplink/downlink signal, a resource granularity carrying the uplink/downlink signal, sending time and a sending periodicity of the uplink/downlink signal, and a quantity of ports used to send the uplink/downlink signal. A resource of each uplink/downlink signal has a unique identifier, to identify the resource of the downlink signal. It may be understood that the identifier of the resource may also be referred to as an identifier of the resource. This is not limited in embodiments of this application.

3. Beam management:

In a 5G mobile communication system, both a network device and a terminal need to perform transmission by using beams. In downlink transmission, a beam used by the network device is referred to as a downlink transmission beam, and a beam used by the terminal is referred to as a downlink reception beam. In uplink transmission, a beam used by the terminal is referred to as an uplink transmission beam, and a beam used by the network device is referred to as an uplink reception beam. In downlink transmission and uplink transmission, specific beams used by the network device and the terminal may be determined through a beam management procedure.

For example, the network device has M beams, and the terminal has N beams. Then, a downlink beam management process is as follows.

(1) Beam management configuration: The network device sends a configuration message to the terminal, to configure a parameter related to downlink beam management for the terminal, for example, including M measurement resources (which may also be referred to as reference signal resources) and a measurement periodicity. The measurement resource may be a reference signal (reference signal, RS) used for beam measurement. The M measurement resources are in a one-to-one correspondence with the M beams of the network device. The network device sends a corresponding measurement resource by using each beam, and the terminal measures the measurement resource to determine quality of the beam corresponding to the measurement resource. It may be understood that beams of the network device are invisible to the terminal, and the terminal may determine quality of each measurement resource. However, the terminal does not sense which beam the measurement resource corresponds to.

(2) Beam measurement: Channel quality corresponding to a beam of each network device is different from channel quality corresponding to a beam of each terminal. The terminal needs to measure channel quality between the beam of each network device and the beam of each terminal, to determine which beam used by the network device for sending and which beam used by the terminal for receiving are preferred. Specifically, in each measurement periodicity, the network device sequentially sends corresponding measurement resources by using the M beams, and the terminal performs receiving and measurement by using one of the N beams, to determine channel quality between a beam currently used by the terminal and the M beams, for example, a reference signal received power (reference signal received power, RSRP). In each measurement periodicity, the terminal sequentially performs receiving and measurement by using different beams, and may determine channel quality between the N beams of the terminal and the M beams of the network device through N measurement periodicities.

(3) Measurement result reporting: The terminal may determine, based on channel quality through beam measurement, an optimal beam that is of the terminal and that corresponds to each measurement resource, or an optimal reception beam or an optimal reception beam of the terminal. The terminal may report, to the network device, information about the measurement resource corresponding to the optimal beam of the terminal, so that the network device determines which beam used by the network device for sending and which beam used by the terminal for receiving are preferred. For example, if the network device performs downlink transmission by using a beam corresponding to a specific measurement resource, the terminal performs receiving by using a corresponding optimal beam. The information that is about the measurement resource and that is reported by the terminal may include identifiers and RSRPs of measurement resources corresponding to a maximum of four optimal beams of the terminal. The network device can determine, based on a correspondence between the M beams and the M measurement resources, a beam that is of the network device and that corresponds to an identifier of a measurement resource reported by the terminal. For example, the terminal may determine, through beam measurement, that four measurement resources with best quality are an RS #1, an RS #2, an RS #3, and an RS #4, and optimal beams that are of the terminal and that correspond to the four measurement resources are a beam B1, a beam B2, the beam B2, and a beam B3 respectively. In other words, in the four measurement resources received by the terminal by using the beam B1, quality of the RS #4 is the best. In the four measurement resources received by the terminal by using the beam B2, quality of the RS #2 and the RS #3 is the best. In the four measurement resources received by the terminal by using the beam B3, quality of the RS #1 is the best. The terminal may report, to the network device, the RS #1, an RSRP 1 corresponding to the RS #1, the RS #2, an RSRP 2 corresponding to the RS #2, the RS #3, an RSRP 3 corresponding to the RS #3, the RS #4, and an RSRP 4 corresponding to the RS #4.

(4) Terminal reception beam maintenance: After the terminal reports, to the network device, a measurement result corresponding to the optimal beam of the terminal, the terminal may maintain a mapping relationship between the optimal beam of the terminal and a measurement resource corresponding to the optimal beam of the terminal. For example, the mapping relationship may be shown in Table 1 below.

Table 1

| RS identifier | Optimal beam of a terminal |
|---------------|---------------------------|
| RS #1 | Beam B3 |
| RS #2 | Beam B2 |
| RS #3 | Beam B2 |
| RS #4 | Beam B1 |

4. Beam indication:

In downlink transmission, a beam used by a network device needs to be notified to a terminal, so that the terminal determines which beam to be used for receiving. Specifically, the network device may indicate an identifier of a measurement resource to the terminal, to notify the terminal that the network device performs downlink sending by using a beam corresponding to the measurement resource. In this way, the terminal may perform receiving by using an optimal beam that is of the terminal and that corresponds to the measurement resource. For example, the network device notifies the terminal that the network device performs downlink sending by using a beam corresponding to the RS #2, and the terminal performs downlink receiving by using the beam B2. In uplink transmission, a beam used by the terminal for sending is also indicated by the network device. Specifically, the network device may indicate an identifier of a measurement resource to the terminal, indicating that the terminal is required to perform uplink transmission by using an optimal beam that is of the terminal and that corresponds to the measurement resource. For example, the network device indicates to the terminal that uplink transmission is performed by using a beam corresponding to the RS #2, and the terminal performs uplink transmission by using the beam B2.

It can be learned from the foregoing related description that the narrow beam increases the transmission distance and also brings large beam management overheads, and a base station needs more narrow beams to cover all space. During beam management, to select a beam most suitable for the terminal, the terminal also needs to traverse and measure a large quantity of candidate beams. Consequently, beam management overheads are large. For this technical problem, a conventional technology currently proposes to implement beam management through hierarchical sweeping, to reduce beam management overheads. The following specifically describes the implementation.

5. Beam management based on hierarchical sweeping:

Hierarchical sweeping usually includes two phases: a first phase is coarse sweeping, and a second phase is fine sweeping. In the first phase, a base station may perform sweeping by using wide beams, to determine a direction of a specific wide beam in which the terminal is located, or to align a terminal with a wide beam. However, precision of an alignment direction is not high, and quality of an established wireless communication connection is also limited. Then, in the second phase, the base station may perform sweeping, by using a plurality of narrow beams, one by one on directions covered by the wide beams in the first phase, to accurately determine a direction of a specific narrow beam in which the terminal is located, thereby improving quality of an established wireless communication connection. It can be learned that, in the second phase, although a sweeping beam is narrowed, a required sweeping range is reduced, and a quantity of sweeping times is correspondingly reduced.

For example, as shown in FIG. 2, for the first phase, the base station performs sweeping by using a wide beam ta and a wide beam tb, to determine that the terminal is located in a direction of the wide beam ta. For the second phase, if it is assumed that every four narrow beams can cover a corresponding wide beam, the base station may perform sweeping, by using a narrow beam t1 to a narrow beam t4, a range covered by the wide beam ta, to determine that the terminal is located in a direction of the narrow beam t1. In other words, the base station can accurately determine a position of the terminal by sweeping for only six times. Compared to sweeping all eight narrow beams, this reduces a quantity of sweeping times by two, thereby reducing beam management overheads.

However, with emergence of an artificial intelligence (artificial intelligence, AI) technology in recent years, its application in beam management has achieved significant effects. Compared with beam management based on hierarchical sweeping, the artificial intelligence technology can further reduce beam management overheads. Details are described below.

6. AI-based beam management:

Machine learning is an important technical way to implement artificial intelligence. Machine learning may be divided into supervised learning, unsupervised learning, and reinforcement learning.

In terms of supervised learning, based on collected sample values and sample labels, a mapping relationship between the sample values and the sample labels is learned by using a machine learning algorithm, and the learned mapping relationship is expressed by using a machine learning model. A process of training the machine learning model is a process of learning the mapping relationship. For example, during signal detection, a received signal including noise is a sample, and a real constellation point corresponding to the signal is a label. Machine learning expects to learn a mapping relationship between the sample and the label through training, that is, enable the machine learning model to learn a signal detector. During training, a model parameter is optimized by calculating an error between a predicted value of a model and an actual label. Once the mapping relationship is learned, each new sample label can be predicted by using the learned mapping. The mapping relationship learned through supervised learning may include linear mapping and non-linear mapping. A learning task may be classified into a classification task and a regression task based on a type of a label.

In terms of unsupervised learning, an internal pattern of a sample is explored autonomously by using an algorithm based on only a collected sample value. For a specific type of algorithm in unsupervised learning, a sample is used as a supervised signal. In other words, a model learns a mapping relationship between samples, which is referred to as self-supervised learning. During training, a model parameter is optimized by calculating an error between a predicted value of the model and the sample. Self-supervised learning may be used for signal compression and decompression restoration. Common algorithms include an autoencoder, a generative adversarial network, and the like.

Reinforcement learning is different from supervised learning, and is an algorithm that learns a strategy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. A goal of reinforcement learning is also to learn a mapping relationship between an environment status and an optimal decision action. However, a label of a "correct action" cannot be obtained in advance. Therefore, a network cannot be optimized by calculating an error between an action and the "correct action". Reinforcement learning training is implemented through iterative interaction with the environment.

A deep neural network (deep neural network, DNN) is a specific implementation form of machine learning. According to a universal approximation theorem, the neural network can approximate any continuous function in theory, so that the neural network has a capability of learning any mapping. A conventional communication system needs to design a communication module with rich expert knowledge. However, a DNN-based deep learning communication system can automatically discover an implicit pattern structure from a large quantity of datasets, establish a mapping relationship between data, and obtain performance better than that of a conventional modeling method.

An idea of the DNN comes from a neuron structure of a brain tissue. Each neuron performs a weighted summation operation on input values of the neuron, and generates an output based on a weighted summation result by using a non-linear function. For example, as shown in FIG. 3, it may be assumed that an input of a neural is $x = [x_0, ..., x_n]$, a weight corresponding to the input is $d = [d_0, ..., d_n]$, a bias of weighted summation is b, and the non-linear function may be in various forms, for example, may be a maximum-value function of $\max\{0, x\}$. On this basis, an execution effect of a neuron may be

$$\max\{0, \sum_{i=0}^{n} d_i x_i + b\}$$ . A weight of each neuron is a model parameter of the DNN. The model parameter can be optimized in a training process, so that the DNN has a data feature extraction capability and a mapping relationship expression capability. The DNN usually optimizes the model parameter according to a supervised learning or unsupervised learning strategy.

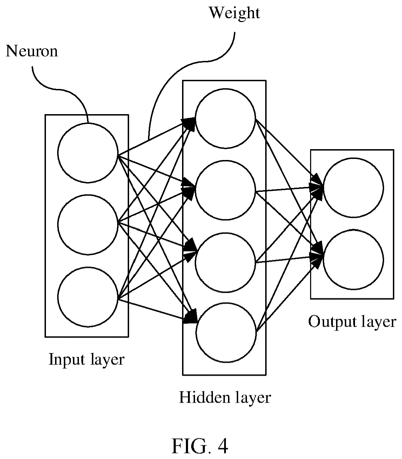

As shown in FIG. 4, the DNN usually has a multi-layer structure. Each layer of the DNN may include a plurality of neurons. An input layer of the DNN processes a received value by using a neuron, and then transfers a processed value to an intermediate hidden layer. The DNN usually has more than one hidden layer, and the hidden layer usually directly affects an information extraction capability and a function fitting capability. Increasing a quantity of hidden layers of the DNN or increasing a width of each layer can improve the function fitting capability of the DNN. Then, the hidden layer of the DNN processes a received value by using a neuron, and then transfers a calculation result to a final output layer, to generate a final output of the DNN.

Based on a network construction manner, the DNN may be classified into a feedforward neural network (feed-forward neural network, FNN), a convolutional neural network (convolutional neural network, CNN), and a recurrent neural network (recurrent neural network, RNN).

A characteristic of the FNN is that every two neurons at adjacent layers are fully connected. This causes the FNN to usually require a large amount of storage space, and leads to high calculation complexity.

The CNN is a neural network dedicated to processing data of a similar grid structure. For example, both time series data (time axis discrete sampling) and image data (two-dimensional discrete sampling) may be considered as the data of the similar grid structure. The CNN performs a convolution operation by capturing partial information through a window with a fixed size rather than performing an operation by using all input information at one time, which greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. Actually, there may also be a neural network of another type or structure. Details are not described in embodiments of this application. In addition, the neural network mentioned in embodiments of this application may alternatively be replaced with any other possible description, for example, a neural network model, a network model, an AI model, or an AI network model. This is not limited herein.

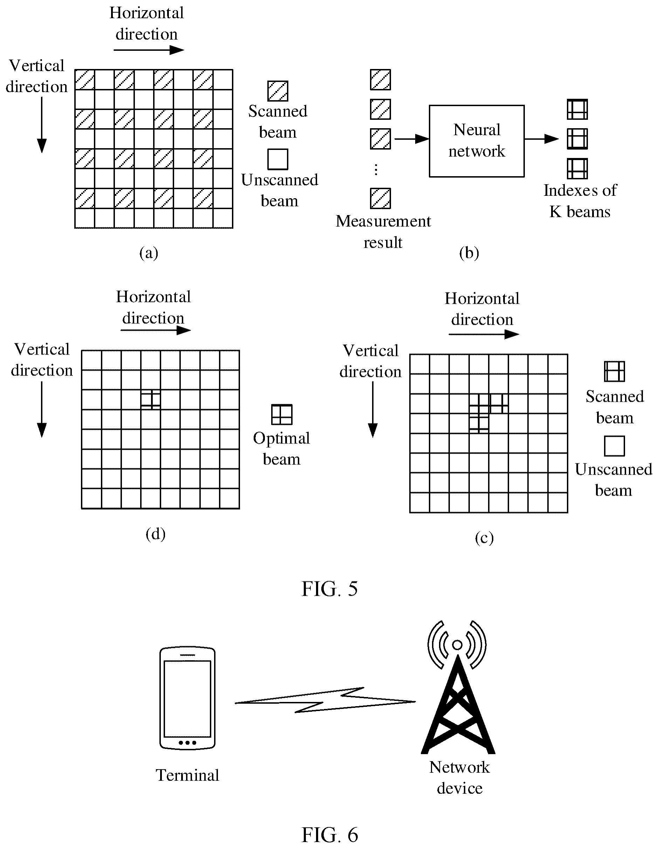

After the neural network is introduced into beam management, the terminal may perform prediction, based on the neural network, on which beams can be used as optimal beams, thereby further reducing beam management overheads. Specifically, in a current AI-based beam management procedure, the terminal usually needs to configure two groups of measurement resources. One group of measurement resources may be used to implement a first round of sparse beam sweeping, and is denoted as a measurement resource group #1. The other group of measurement resources may be used to implement a second round of sweeping, and is denoted as a measurement resource group #2. A narrow beam is used as an example. A distribution pattern of sparse beams may be shown in (a) in FIG. 5. The base station may send eight narrow beams with different directions in a horizontal direction, and may also send eight narrow beams with different directions in a vertical direction. There are 64 beams in total. A sparse beam may be selected from the 64 beams, and a quantity of sparse beams is usually 1/4 of a total quantity of beams. Alternatively, in the first round of sparse beam sweeping, the narrow beam may be replaced with a wide beam. This is not specifically limited. In the first round of sparse beam sweeping, the terminal may use a beam to receive a measurement resource sent by the base station by using the sparse beam, to determine a measurement result, for example, an RSRP. For details, refer to the related description of beam management above. Details are not described herein again. As shown in (b) in FIG. 5, the terminal may input the measurement result into the neural network to obtain indexes of K beams, and report the indexes of the K beams to the base station. The K beams are beams that are most likely to become optimal beams through prediction by the neural network. A value of K may be pre-configured in the neural network, for example, 3, 4, or 5. As shown in (c) in FIG. 5, in the second round of sweeping, the base station may send the K beams by using the measurement resource group #2. The terminal may use a beam to receive a measurement resource sent by the base station by using the K beams, to determine a measurement result, and finally report, to the base station, a measurement resource corresponding to an optimal beam, as shown in (d) in FIG. 5.

It can be learned that a value of K in the conventional technology is usually pre-configured. In practice, a quantity of optimal beams may be less than K. That is, there is a difference between a predicted quantity and an actual quantity. Consequently, the indexes that are of the K beams and that are reported by the terminal are redundant. For example, N is less than K, and the quantity of optimal beams is N. In this case, indexes that are of N-K beams and that are reported by the terminal are redundant. Consequently, reporting overheads and air interface overheads are redundant, and communication efficiency is affected.

The following describes technical solutions of this application with reference to the accompanying drawings.

The technical solutions in embodiments of this application may be applied to various communication systems, for example, a radio network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5th generation (5th generation, 5G), for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are matchable when differences of the terms are not emphasized. The terms "of (of)", "corresponding, relevant (corresponding, relevant)", and "corresponding (corresponding)" may sometimes be interchangeably used. It should be noted that meanings expressed by the terms are matchable when differences of the terms are not emphasized. In addition, "/" mentioned in this application may indicate an "or" relationship.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 6 is first used as an example to describe in detail a communication system applicable to embodiments of this application. For example, FIG. 6 is a diagram 1 of an architecture of a communication system to which a communication method is applicable according to an embodiment of this application.

As shown in FIG. 6, the communication system may include: a terminal and a network device.

The terminal may be a terminal having a receiving and sending function, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having wireless sending and receiving functions, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units. Alternatively, the terminal may be customer-premises equipment (customer-premises equipment, CPE).

The network device may be an access network (access network, AN) device, or may be referred to as a radio access network (radio access network, RAN) device. The RAN device may provide an access function for the terminal, and is responsible for functions such as radio resource management, quality of service (quality of service, QoS) management, and data compression and encryption on an air interface side. The RAN device may include a gNB in 5G, for example, an NR system, or one antenna panel or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), for example, a baseband unit (baseband unit, BBU), a central unit (central unit, CU) or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like. Alternatively, the RAN device may include a next generation mobile communication system, for example, a 6G access network device such as a 6G base station. Alternatively, in a next generation mobile communication system, the network device may be named in another manner, which falls within the protection scope of embodiments of this application. This is not limited in this application.

It may be understood that FIG. 6 is a simplified diagram of an example for ease of understanding. The communication system may further include another network device and/or another terminal that are/is not shown in FIG. 6.

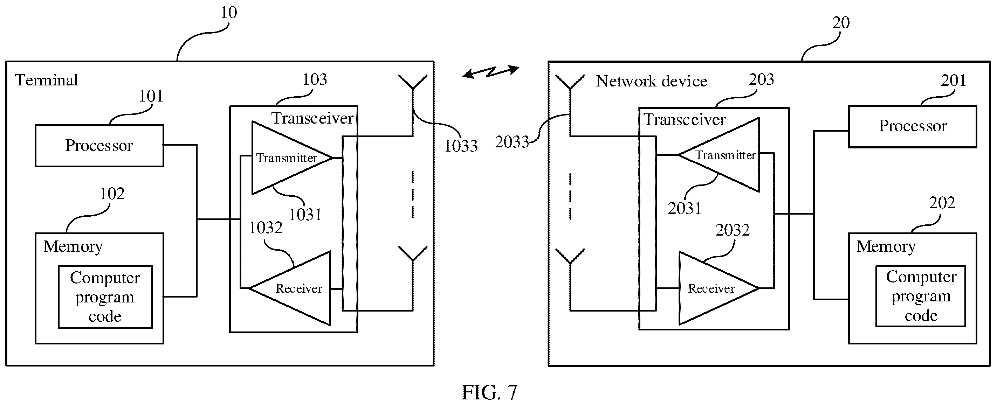

FIG. 7 is a diagram 2 of an architecture of a communication system to which a communication method is applicable according to an embodiment of this application. As shown in FIG. 7, communication between a network device and a terminal in the communication system may alternatively be represented in another form.

The terminal 10 includes a processor 101, a memory 102, and a transceiver 103. The transceiver 103 includes a transmitter 1031, a receiver 1032, and a plurality of antennas 1033 (antenna panels). The network device 20 includes a processor 201, a memory 202, and a transceiver 203. The transceiver 203 includes a transmitter 2031, a receiver 2032, and at least one antenna 2033 (antenna panel). The transmitter 2031 may be configured to send transmission control information to the terminal 10 through the antenna 2033, for example, indication information indicating frequency division and simultaneous transmission of a plurality of antenna panels. Correspondingly, the receiver 1032 may be configured to receive the transmission control information through the antenna 1033. In this way, the transmitter 1031 may be configured to send transmission feedback information, namely, uplink data, to the network device 20 in a frequency division and simultaneous transmission manner through the plurality of antennas 1033 (the plurality of antenna panels). Correspondingly, the receiver 2032 may be configured to receive, through the antenna 2033, the transmission feedback information sent by the terminal 10.

In this embodiment of this application, after the terminal obtains a measurement result of an RS through measurement by using a first RS resource set, the terminal may perform prediction on the measurement result of the RS by using a neural network model, to determine a candidate RS resource set that belongs to a second RS resource set. In this case, the terminal may further select a target RS resource set from the candidate RS resource set as a finally reported RS resource, to reduce redundant overheads in a measurement process and improve communication efficiency. Alternatively, after the terminal obtains the measurement result of the RS through measurement by using the first RS resource set, the terminal may directly report the measurement result to the network device. In this way, the network device may perform prediction on the measurement result of the RS by using the neural network model, to determine the candidate RS resource set that belongs to the second RS resource set, to further select the target RS resource set from the candidate RS resource set as a finally reported RS resource, thereby reducing redundant overheads in a measurement process and improving communication efficiency.

It may be learned that further selecting the target RS resource set from the candidate RS resource set may be performed by the terminal or may be performed by the network device. For ease of understanding, the following separately describes the method embodiments.

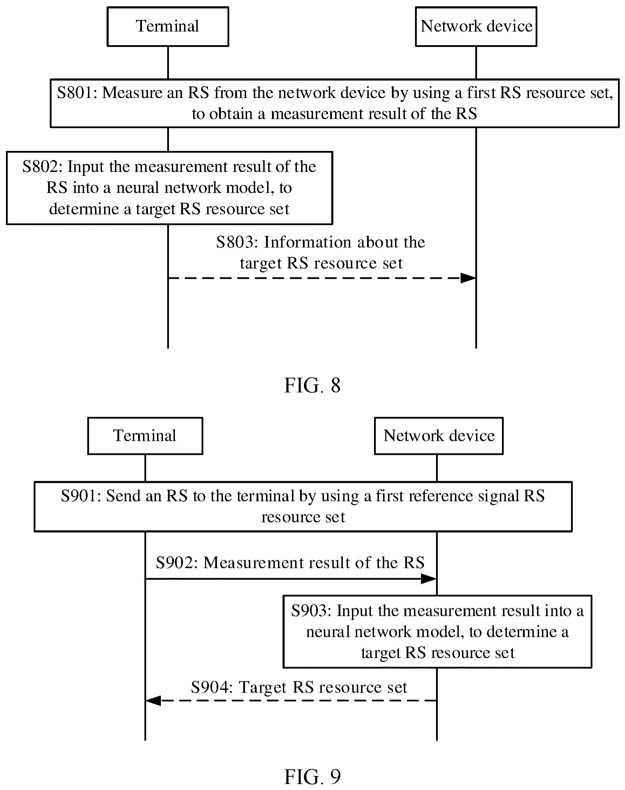

For example, FIG. 8 is a schematic flowchart 1 of a communication method according to an embodiment of this application. The method is applicable to communication between the network device and the terminal in the foregoing communication system. In the method shown in FIG. 8, the terminal may further select a target RS resource set from a candidate RS resource set. Details are described below.

As shown in FIG. 8, a procedure of the communication method is as follows.

S801: The terminal measures an RS from the network device by using a first RS resource set, to obtain a measurement result of the RS.

The first RS resource set may be used to transmit an RS. In other words, the network device sends the RS to the terminal by carrying the RS in the first RS resource set. Correspondingly, the terminal receives the RS carried in the first RS resource set. Sending the RS by the network device may also be understood as sending a corresponding beam. For example, the RS is an SSB, and the beam may be a wide beam. For another example, the RS is a CSI-RS, and the beam may be a narrow beam. These beams are sparse in space, may be understood as sparse beams, and may be specifically beams in some pointing directions among beams in all pointing directions. The sparse beams may be evenly distributed in space, or may be unevenly distributed, or may be randomly distributed. This is not specifically limited herein. For example, as shown in (a) in FIG. 5, the network device may send eight narrow beams with different directions in a horizontal direction, and may also send eight narrow beams with different directions in a vertical direction. There are 64 beams in total. The sparse beams may be some of the 64 beams, for example, 16 beams.

The first RS resource set may be pre-configured and aligned by the network device and the terminal, for example, pre-configured by the network device for the terminal, or pre-configured locally in the terminal and the network device according to a protocol. For the network device, the first RS resource set usually corresponds to beams. In other words, after the network device knows the first RS resource set, the network device may know time-frequency resources on which beams or RSs in which spatial directions need to be sent. Similarly, for the terminal, the first RS resource set usually corresponds to beams. In other words, after the terminal knows the first RS resource set, the terminal may know time-frequency resources on which beams or RSs from the network device are received. In this way, the terminal may receive these RSs on corresponding time-frequency resources by using each beam of the terminal, and perform measurement, to obtain measurement results, for example, RSRPs, corresponding to each beam of the terminal. The measurement results may also be referred to as measurement results of these RSs. For example, the terminal receives an RS #1 to an RS #3 by using a beam B1, and also receives the RS #1 to the RS #3 by using a beam B2. In this way, measurement results of the RSs may include an RSRP 1 when the RS #1 is received by using the beam B1, an RSRP 2 when the RS #2 is received by using the beam B1, an RSRP 3 when the RS #3 is received by using the beam B1, an RSRP 4 when the RS #1 is received by using the beam B2, an RSRP 5 when the RS #2 is received by using the beam B2, and an RSRP 6 when the RS #3 is received by using the beam B2.

S802: The terminal inputs the measurement result of the RS into a neural network model, to determine the target RS resource set.

The neural network model may be the DNN model mentioned above. For details, refer to the related description of the DNN. Alternatively, the neural network model may be any possible model. This is not limited herein. The neural network model may be a trained model. For a training process of the neural network model, refer to the related descriptions below for understanding. Details are not described herein again.

The target RS resource set may be a set of optimal RS resources. Because an RS resource usually corresponds to a beam, a beam corresponding to an optimal RS resource is an optimal beam. For example, a beam used by the network device to send the RS resource is an optimal transmission beam of the network device, and a beam used by the terminal to receive the optimal RS resource is an optimal reception beam of the terminal. The optimal transmission beam of the network device and the optimal reception beam of the terminal are a beam pair, and may be used for subsequent air interface transmission between the network device and the terminal, to ensure air interface transmission quality. For example, the target RS resource set includes an RS resource #1 and an RS resource #2. An optimal transmission beam #B1 that is of the network device and that corresponds to the RS resource #1 and an optimal reception beam #B1 that is of the terminal and that corresponds to the RS resource #1 are a beam pair. An optimal transmission beam #B2 that is of the network device and that corresponds to the RS resource #2 and the optimal reception beam #B1 that is of the terminal and that corresponds to the RS resource #2 are another beam pair. In this case, air interface transmission between the network device and the terminal may be implemented by using the optimal transmission beam #B1 and the optimal reception beam #B1 or by using the optimal transmission beam #B2 and the optimal reception beam #B1.

The target RS resource set may be an RS resource set determined from the candidate RS resource set.

The candidate RS resource set may be determined by the neural network model based on the measurement result of the RS. The candidate RS resource set may belong to a second RS resource set. The second RS resource set may also be used to transmit an RS. In other words, the network device sends the RS to the terminal by carrying the RS in the second RS resource set. Correspondingly, the terminal receives the RS carried in the second RS resource set. In this case, the RS transmitted by using the second RS resource set may be the same as or different from the RS transmitted by using the first RS resource set. For example, the RS transmitted by using the second RS resource set is a CSI-RS, and the RS transmitted by using the second RS resource set is a CSI-RS or an SSB. It may be understood that all RSs transmitted by using the second RS resource set are CSI-RSs, and sending these RSs by the network device may also be understood as sending corresponding beams. Therefore, the second RS resource set may be an RS resource set used to send all narrow beams. For example, as shown in (a) in FIG. 5, the network device may send eight narrow beams with different directions in a horizontal direction, and may also send eight narrow beams with different directions in a vertical direction. There are 64 beams in total. The second RS resource set is an RS resource set used to send the 64 beams.

In addition, similar to the first RS resource set, the second RS resource set may also be pre-configured and aligned by the network device and the terminal, for example, pre-configured by the network device for the terminal, or pre-configured locally in the terminal and the network device according to a protocol. In this way, after the network device knows the second RS resource set, the network device may know time-frequency resources on which beams or RSs in which spatial directions need to be sent. Similarly, after the terminal knows the second RS resource set, the terminal may know time-frequency resources on which beams or RSs from the network device are received.

In this embodiment of this application, that the candidate RS resource set is an RS resource set determined by the neural network model based on the measurement result of the RS may be specifically as follows: Information about the candidate RS resource set is an RS resource set determined by the neural network model based on the measurement result of the RS. In other words, the terminal may input the measurement result of the RS into the neural network model, to obtain the information that is about the candidate RS resource set and that is output by the neural network model, namely, information about each RS resource in the candidate RS resource set. An input into the neural network model may be all measurement results of the RS, for example, the RSRP 1 to the RSRP 6; or may be a part of measurement results of the RS, for example, the RSRP 1 to the RSRP 3. In addition, a quantity of RS resources in the candidate RS resource set may be pre-configured in the neural network model, for example, 3 to 5, or any other possible quantity. In other words, the neural network model may fixedly output information about three to five RS resources by calculating the measurement result of the RS.

The information about the candidate RS resource set may be used to represent that an RS resource in the candidate RS resource set may be used as an optimal RS or a possibility that an RS resource in the candidate RS resource set is used as an optimal RS resource. In other words, a possible optimal RS resource may be predicted by using the neural network model, to reduce beam management overheads. For example, the information about the candidate RS resource set may include at least one of the following: a probability that each RS resource in the candidate RS resource set is an optimal RS resource, signal quality of each RS resource in the candidate RS resource set, for example, an RSRP, or an RSRP of an RS carried in the RS resource, or an angle of each RS resource in the candidate RS resource set. The angle of the RS resource may be an angle difference between a transmission beam (a beam of the network device) and a reception beam (a beam of the terminal) that correspond to the RS resource, specifically, an angle difference between the transmission beam and the reception beam that are relative to a same reference direction. The reference direction may not be limited. For example, a direction of the transmission beam is used as a reference manner, a direction of the reception beam is used as a reference manner, or any possible direction is used as a reference direction. It may be understood that a smaller angle difference indicates a higher degree of overlap between the transmission beam and the reception beam, and better transmission quality.

It can be learned from the foregoing description that, when the information about the candidate RS resource set includes the probability of the optimal RS resource, the probability of the optimal RS resource may explicitly indicate a possibility that the RS resource may be used as an optimal RS resource. In this way, the network device can perform effective resource scheduling or configuration based on the probability, to avoid redundant overheads. Alternatively, when the information about the candidate RS resource set includes the signal quality of the RS resource, the terminal needs to report the signal quality of the RS resource, for example, an RSRP, to the network device. Therefore, the signal quality of the RS resource is reused to implicitly indicate that the RS resource may be used as an optimal RS resource, to reduce reporting overheads. Alternatively, when the information about the candidate RS resource set includes the angle of the RS resource, the angle of the RS resource may also explicitly indicate a possibility that the RS resource is used as an optimal RS resource. For example, a smaller angle indicates a higher possibility that the RS resource is used as an optimal RS resource. In this way, the network device can also perform effective resource scheduling or configuration based on the angle, to avoid redundant overheads.

It may be understood that a type of information output by the neural network model depends on a training manner of the model. For example, if the neural network model uses a classification training manner, an output of the neural network model is classification or a probability of a specific type, namely, the probability that the RS resource is an optimal RS resource in this embodiment of this application. For another example, if the neural network model uses a regression training manner, an output of the neural network model is regression or a specific value, namely, the signal quality of the RS resource or the angle of the RS resource in this embodiment of this application.

It may be further understood that the foregoing describes an inference process of the trained neural network model in an actual application process. For ease of understanding, a training process of the neural network model is described herein based on a principle of the inference process. Actually, the training process is roughly the same as the inference process, but a difference lies in that the training process further includes a back propagation step, and the training process implements training of the neural network model through back propagation.

For example, taking the classification training manner as an example, the information output by the neural network model is a probability that an RS resource is an optimal RS resource, for example, 0.7. In a training sample, the RS resource is actually an optimal RS resource. That is, an actual probability is 1. In this case, a difference between the information output by the neural network model and the training sample is 1-0.7=0.3. Therefore, the difference may be back-propagated to the neural network model, to adjust a weight of a neuron in the neural network model, thereby implementing one-time training. Through continuous iteration of the training process, an output of the neural network model for the RS resource that is actually an optimal RS resource gradually approaches 1, and an output of the neural network model for the RS resource that is actually not an optimal RS resource gradually approaches 0. When accuracy of the output of the neural network model reaches a threshold, for example, greater than 99.99%, it is considered that the neural network model is converged and training is completed.

For another example, taking the regression training manner as an example, the information output by the neural network model is signal quality of an RS resource, for example, 3 dB. In a training sample, actual signal quality of the RS resource is 5 dB. In this case, a difference between the information output by the neural network model and the training sample is 5 dB-3 dB=2 dB. Therefore, the difference may be back-propagated to the neural network model, to adjust a weight of a neuron in the neural network model, thereby implementing one-time training. Through continuous iteration of the training process, signal quality output by the neural network model for the RS resource gradually approaches actual signal quality of the RS resource. When the signal quality output by the neural network model for the RS resource is slightly different from or even the same as the actual signal quality of the RS resource, it is considered that the neural network model implements accurate output. When accuracy of the output of the neural network model reaches a threshold, for example, greater than 99.99%, it is considered that the neural network model is converged and training is completed.

In this embodiment of this application, the target RS resource set may be specifically an RS resource set determined from the candidate RS resource set based on a first threshold and the information about the candidate RS resource set.

The first threshold may be related to the information about the candidate RS resource set. For example, the first threshold may be set based on an information type of the candidate RS resource set (for details, refer to the related description below), so that a redundant RS in the candidate RS resource set can be more accurately screened out. For example, the information about the candidate RS resource set is a probability that an RS resource is an optimal RS resource, and a probability represented by the first threshold may be a minimum probability that the RS resource is used as an optimal RS resource. For another example, the information about the candidate RS resource set is signal quality of an RS resource, and signal quality represented by the first threshold may be minimum signal quality of the RS resource that is used as an optimal RS resource. For another example, the information about the candidate RS resource set is an angle of an RS resource, and an angle represented by the first threshold may be a minimum angle of the RS resource that is used as an optimal RS resource.

The first threshold may be a pre-configured threshold. For example, the first threshold may be pre-configured by the network side for the terminal, and stored locally in the terminal. Specifically, the terminal may receive indication information from the network device, and the indication information may indicate the first threshold, to implement flexible configuration according to an actual requirement. Alternatively, the first threshold may be pre-configured (stored) locally in the terminal or pre-configured in the neural network model, to avoid unnecessary overheads caused because the network side separately configures the first threshold.

When the first threshold is stored locally in the terminal, the terminal may screen the information of the candidate RS resource set based on the first threshold. Alternatively, when the first threshold is configured in the neural network model, the neural network model may screen the information about the candidate RS resource set based on the first threshold. In this case, information about the determined target RS resource set and the first threshold meet at least one of the following relationships: a probability that an RS resource in the target RS resource set is an optimal RS resource is greater than the probability represented by the first threshold, signal quality of an RS resource in the target RS resource set is greater than the signal quality represented by the first threshold, or an angle of each RS resource in the RS resource set is less than the angle represented by the first threshold. In other words, an RS resource that is most likely to be used as an optimal RS resource can be selected from the candidate RS resource set based on the first threshold, to avoid redundant overheads.

It may be understood that, if information about all RS resources in the candidate RS resource set meets the first threshold, the target RS resource set is the candidate RS resource set. For example, the candidate RS resource set includes an RS resource #1 to an RS resource #4. An RSRP of the RS resource #1 is 4 dB, an RSRP of the RS resource #2 is 5 dB, an RSRP of the RS resource #3 is 4.2 dB, and an RSRP of the RS resource #3 is 4.6 dB. If an RSRP represented by the first threshold is 3.5 dB, the RSRPs of the RS resource #1 to the RS resource #4 are all greater than the RSRP represented by the first threshold. Therefore, the RS resource #1 to the RS resource #4 may be selected. That is, the target RS resource set also includes the RS resource #1 to the RS resource #4.

Alternatively, if information about only some RS resources in the candidate RS resource set meets the first threshold, the target RS resource set includes the some RS resources that meet the first threshold and that are in the candidate RS resource set. For example, the candidate RS resource set includes an RS resource #1 to an RS resource #4. An RSRP of the RS resource #1 is 4 dB, an RSRP of the RS resource #2 is 5 dB, an RSRP of the RS resource #3 is 4.2 dB, and an RSRP of the RS resource #3 is 4.6 dB. If an RSRP represented by the first threshold is 4.5 dB, only the RSRPs of the RS resource #2 and the RS resource #4 are greater than the RSRP represented by the first threshold. Therefore, the RS resource #2 and the RS resource #4 may be selected. That is, the target RS resource set includes the RS resource #2 and the RS resource #4, but does not include the RS resource #1 and the RS resource #3.

Alternatively, if information about no RS resource in the candidate RS resource set meets the first threshold, it indicates that a value of the first threshold may be inappropriate, and the terminal needs to reconfigure the first threshold with a more appropriate value.

In conclusion, after the terminal obtains the measurement result of the RS through measurement by using the first RS resource set, the terminal may perform prediction on the measurement result of the RS by using the neural network model, to determine the candidate RS resource set that belongs to the second RS resource set. In this case, the terminal may further select the target RS resource set from the candidate RS resource set as a finally reported RS resource, to reduce redundant overheads in a measurement process and improve communication efficiency.

Optionally, with reference to S801 and S802, the communication method provided in this embodiment of this application may further include the following step.

S803: The terminal sends the information about the target RS resource set to the network device.

The information that is about the target RS resource set and that is sent by the terminal to the network device is used by the network device to determine which RS resources can be used as optimal RS resources. The information that is about the target RS resource set and that is sent by the terminal to the network device may include at least one of the following: an identifier of the RS resource in the target RS resource set, the signal quality of the RS resource in the target RS resource set, or the angle of each RS resource in the RS resource set. For example, in one case, the information about the target RS resource set may include the identifier and the signal quality of the RS resource, to jointly indicate which RS resources may be used as optimal RS resources. Alternatively, in another case, the information about the target RS resource set may include the angle of the RS resource. In this way, the network device may also determine, based on only the angle of the RS resource, that the RS resource may be used as an optimal RS resource.

It may be understood that, that the network device determines, based on the information about the target RS resource set, which RS resources can be used as the optimal RS resources may be implemented in a manner in a conventional technology. For details, refer to the related description in "6. AI-based beam management". Details are not described herein again.

Optionally, in the communication method provided in this embodiment of this application, there may be a plurality of target RS resource sets, denoted as a target RS resource set group, and the plurality of target RS resource sets in the target RS resource set group may be separately configured in different time units for use, to ensure that an optimal RS resource can be used for air interface transmission in each time unit, thereby ensuring stability and reliability of air interface transmission. In this case, the communication method provided in this embodiment of this application may be replaced with being implemented by performing step A to step C. Details are described below.

Step A: The terminal measures an RS from the network device by using a first reference signal RS resource set, to obtain a measurement result of the RS.

The terminal may separately perform measurement in a plurality of time units, to obtain measurement results of RSs in each time unit. The plurality of time units may be adjacent time units, or may not be adjacent time units. This is not limited herein. In addition, a specific principle of obtaining, by the terminal, the measurement results of the RSs in each time unit through measurement in each time unit is similar to that in S801. For details, refer to the foregoing description. Details are not described herein again.

It may be understood that the time unit is merely an example name for ease of description in this embodiment, and may alternatively be replaced with any possible name, for example, a time window, a sliding time window, or a periodicity. This is not specifically limited.

Step B: The terminal inputs the measurement result into a neural network model, to determine a target RS resource set group.

The target RS resource set group may include target RS resource sets respectively corresponding to the plurality of time units, or may include a plurality of target RS resource sets that are separately configured in different time units for use, for example, include a first target RS resource set corresponding to a first time unit and a second target RS resource set corresponding to a second time unit. The first time unit and the second time unit are different time units, for example, two adjacent time units. The first target RS resource set is determined from a first candidate RS resource set, and the second target RS resource set is determined from a second candidate RS resource set. The first candidate RS resource set and the second candidate RS resource set are determined by the neural network model based on the measurement result, and both the first candidate RS resource set and the second candidate RS resource set belong to a second RS resource set. Details are described below.

Specifically, the terminal may input a part of or all of the measurement results determined in step A into the neural network module, to obtain information about a candidate RS resource set group, for example, including information about the first candidate RS resource set and information about the second candidate RS resource set. In other words, the information about the first candidate RS resource set is determined by the neural network model based on the measurement result of the RS in step A, and the information about the second candidate RS resource set is determined by the neural network model based on the measurement result of the RS in step A.

The information about the first candidate RS resource set may include at least one of the following: a probability that each RS resource in the first candidate RS resource set is an optimal RS resource, signal quality of each RS resource in the first candidate RS resource set, or an angle of each RS resource in the first candidate RS resource set. The angle of each RS resource in the first candidate RS resource set may be an angle difference between a transmission beam and a reception beam that correspond to the RS resource.

The information about the second candidate RS resource set may include at least one of the following: a probability that each RS resource in the first candidate RS resource set is an optimal RS resource, signal quality of each RS resource in the first candidate RS resource set, or an angle of each RS resource in the first candidate RS resource set. The angle of each RS resource in the first candidate RS resource set may be an angle difference between a transmission beam and a reception beam that correspond to the RS resource.

The terminal or the neural network model may screen the first candidate RS resource set based on a first threshold and the information about the first candidate RS resource set, to obtain the first target RS resource set. In other words, the first target RS resource set is determined from the first candidate RS resource set based on the first threshold and the information about the first candidate RS resource set. The first threshold is related to the information about the first candidate RS resource set. In this case, information about the first target RS resource set and the first threshold may meet at least one of the following relationships: A probability that an RS resource in the first target RS resource set is an optimal RS resource is greater than a probability represented by the first threshold, signal quality of an RS resource in the first target RS resource set is greater than signal quality represented by the first threshold, or an angle of each RS resource in the first RS resource set is less than an angle represented by the first threshold.

Similarly, the terminal or the neural network model may also screen the second candidate RS resource set based on a second threshold and the information about the second candidate RS resource set, to obtain the second target RS resource set. In other words, the second target RS resource set is determined from the second candidate RS resource set based on the second threshold and the information about the second candidate RS resource set. The second threshold is related to the information about the second candidate RS resource set. In this case, information about the second target RS resource set and the second threshold may also meet at least one of the following relationships: A probability that an RS resource in the first target RS resource set is an optimal RS resource is greater than a probability represented by the first threshold, signal quality of an RS resource in the first target RS resource set is greater than signal quality represented by the first threshold, or an angle of each RS resource in the first RS resource set is less than an angle represented by the first threshold.

It may be understood that the first threshold and the second threshold may be a same threshold. In this case, for a configuration manner of the first threshold or the second threshold, refer to the related description in 902. Alternatively, the first threshold and the second threshold may be different thresholds. In this case, the first threshold and the second threshold may be separately configured. For example, the terminal may receive first indication information from the network device. The first indication information indicates the first threshold, or the first threshold may be pre-configured in the neural network model, or may be pre-configured locally in the terminal. For another example, the terminal may also receive second indication information from the network device. The second indication information indicates the second threshold, or the second threshold may be pre-configured in the neural network model, or may be pre-configured locally in the terminal.

It may be further understood that determining of each target RS resource set in step B is similar to that in S802. For details, refer to the foregoing description. Details are not described herein again.

It may be further understood that step A and step B may be performed in a polling manner. For example, the terminal separately performs measurement in a time unit t-2 and a time unit t-1, and inputs the measurement result of the RS into the neural network model, to obtain a target RS resource set corresponding to each of a time unit t and a time unit t+1. Then, the terminal separately performs measurement in the time unit t and the time unit t+1, and inputs the measurement result of the RS into the neural network model, to obtain a target RS resource set corresponding to each of a time unit t+2 and a time unit t+3, and so on.

(Optionally) Step C: The terminal sends information about the target RS resource set group to the network device.

For example, the target RS resource set group includes the first target RS resource set and the second target RS resource set. The information that is about the first target RS resource set and that is sent by the terminal to the network device may include at least one of the following: an identifier of the RS resource in the first target RS resource set, the signal quality of the RS resource in the first target RS resource set, or the angle of each RS resource in the first target RS resource set. For a specific implementation, refer to the related description in 903. Details are not described herein again. The information that is about the second target RS resource set and that is sent by the terminal to the network device may include at least one of the following: an identifier of the RS resource in the second target RS resource set, the signal quality of the RS resource in the second target RS resource set, or the angle of each RS resource in the second target RS resource set. For a specific implementation, still refer to the related description in 903. Details are not described herein again.

For example, FIG. 9 is a schematic flowchart 2 of a communication method according to an embodiment of this application. The method is applicable to communication between the network device and the terminal in the foregoing communication system. In the method shown in FIG. 9, the network device may further select a target RS resource set from a candidate RS resource set. Details are described below.

As shown in FIG. 9, a procedure of the communication method is as follows.

S901: The network device sends an RS to the terminal by using a first reference signal RS resource set.

S902: The network device receives a measurement result that is of the RS and that is fed back by the terminal.

The measurement result that is of the RS and that is fed back by the terminal may be all measurement results or a part of measurement results. In other words, the terminal may choose to report only a part of measurement results, to reduce overheads. In addition, specific implementations of S901 and S902 are similar to that of 901. A difference lies in that the terminal further needs to feed back the measurement result to the network device. For other details, refer to the foregoing description. Details are not described herein again.

S903: The network device inputs the measurement result into a neural network model, to determine the target RS resource set.

The target RS resource set is determined from the candidate RS resource set. The candidate RS resource set is determined by the neural network model based on the measurement result. The candidate RS resource set belongs to a second RS resource set. An RS transmitted by using the first RS resource set is the same as or different from an RS transmitted by using the second RS resource set.

In a possible design solution, the target RS resource set may be determined from the candidate RS resource set based on a first threshold and information about the candidate RS resource set, and the first threshold is related to the information about the candidate RS resource set.

Optionally, that the candidate RS resource set is determined by the neural network model based on the measurement result is specifically as follows: The information about the candidate RS resource set is determined by the neural network model based on the measurement result.

Further, the information about the candidate RS resource set includes at least one of the following: a probability that each RS resource in the candidate RS resource set is an optimal RS resource, signal quality of each RS resource in the candidate RS resource set, or an angle of each RS resource in the candidate RS resource set. The angle of each RS resource in the candidate RS resource set is an angle difference between a transmission beam and a reception beam that correspond to the RS resource.

Further, information about the target RS resource set and the first threshold meet at least one of the following relationships: A probability that an RS resource in the target RS resource set is an optimal RS resource is greater than a probability represented by the first threshold, signal quality of an RS resource in the target RS resource set is greater than signal quality represented by the first threshold, or an angle of each RS resource in the RS resource set is less than an angle represented by the first threshold.

Optionally, the first threshold may be pre-configured in the neural network model, or may be pre-configured locally in the network device.

It may be understood that a specific implementation principle of S903 is similar to that of S802. A difference lies in that an execution body of S903 is replaced with the network device. For other details, refer to the foregoing description. Details are not described herein again.

In conclusion, after the terminal obtains the measurement result of the RS through measurement by using the first RS resource set, the terminal may directly report the measurement result to the network device. In this way, the network device may perform prediction on the measurement result of the RS by using the neural network model, to determine the candidate RS resource set that belongs to the second RS resource set, to further select the target RS resource set from the candidate RS resource set as a finally reported RS resource, thereby reducing redundant overheads in a measurement process and improving communication efficiency.

Optionally, with reference to S901 to S903, the communication method provided in this embodiment of this application may further include the following step.

S904: The network device sends the target RS resource set to the terminal.

That the network device sends the target RS resource set to the terminal may be specifically as follows: The network device sends an identifier of each RS resource in the target RS resource set to the terminal, to indicate the network device to send a beam on the target RS resource set, thereby ensuring that the terminal can prepare for receiving and measurement. Then, the terminal further reports the information about the target RS resource set to the network device based on receiving and measurement. In this way, that the network device determines, based on the information about the target RS resource set, which RS resources can be used as the optimal RS resources may be implemented in a manner in a conventional technology. For details, refer to the related description in "6. AI-based beam management". Details are not described herein again.

Optionally, in the communication method provided in this embodiment of this application, there may also be a plurality of target RS resource sets, denoted as a target RS resource set group, and the plurality of target RS resource sets in the target RS resource set group may be separately configured in different time units for use, to ensure that an optimal RS resource can be used for air interface transmission in each time unit, thereby ensuring stability and reliability of air interface transmission. In this case, the communication method provided in this embodiment of this application may be replaced with being implemented by performing step 1 to step 4. Details are described below.

Step 1: The network device sends an RS to the terminal by using a first reference signal RS resource set.

Step 2: The network device receives a measurement result that is of the RS and that is fed back by the terminal.

The terminal may separately perform measurement in a plurality of time units, to obtain measurement results of RSs in each time unit. The plurality of time units may be adjacent time units, or may not be adjacent time units. This is not limited herein. In addition, a specific principle of obtaining, by the terminal, the measurement results of the RSs in each time unit through measurement in each time unit is similar to that in S801. For details, refer to the foregoing description. Details are not described herein again. In addition, similar to S901 and S902, the measurement result that is of the RS and that is fed back by the terminal may be all measurement results or a part of measurement results.

Step 3: The network device inputs the measurement result into a neural network model, to determine the target RS resource set group.

A specific implementation of step 3 is similar to that of step B. A difference lies in that an execution body is replaced with the network device. For other details, refer to the foregoing description. Details are not described herein again.

It may be understood that step 1 to step 3 may be performed in a polling manner. For example, the network device separately performs measurement in a time unit t-2 and a time unit t-1, and inputs the measurement result of the RS into the neural network model, to obtain a target RS resource set corresponding to each of a time unit t and a time unit t+1. Then, the network device separately performs measurement in the time unit t and the time unit t+1, and inputs the measurement result of the RS into the neural network model, to obtain a target RS resource set corresponding to each of a time unit t+2 and a time unit t+3, and so on.

(Optionally) Step 4: The network device sends information about the target RS resource set group to the terminal.

For example, the target RS resource set group includes a first target RS resource set and a second target RS resource set. Information that is about the first target RS resource set and that is sent by the network device to the terminal may include an identifier of an RS resource in the first target RS resource set. Information that is about the second target RS resource set and that is sent by the network device to the terminal may include an identifier of an RS resource in the second target RS resource set.

In addition, a specific implementation of step 4 is similar to that of step C. For details, refer to the foregoing description. Details are not described herein again.

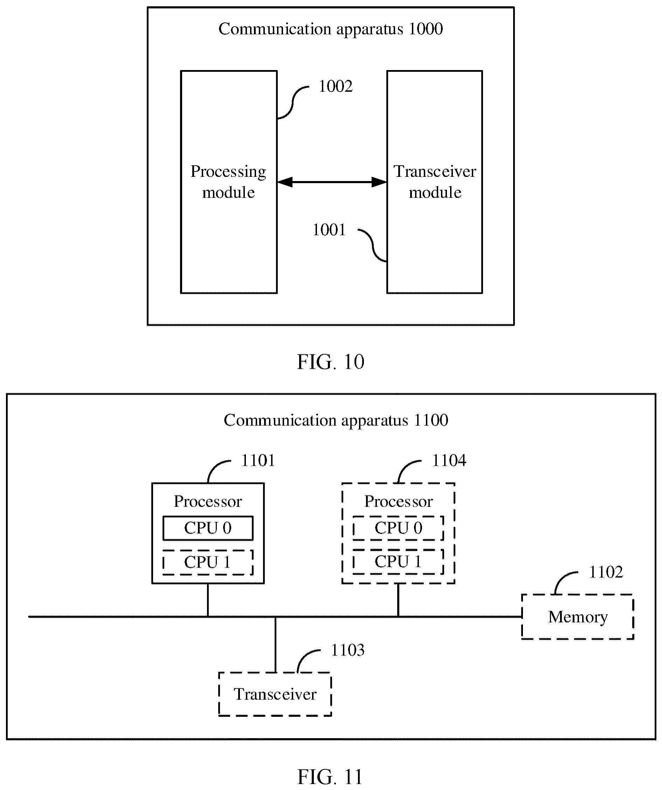

The foregoing describes in detail, with reference to FIG. 8 and FIG. 9, the communication methods provided in embodiments of this application. The following describes in detail, with reference to FIG. 10 and FIG. 11, a communication apparatus configured to perform the communication method provided in embodiments of this application.

FIG. 10 is a diagram 1 of a structure of a communication apparatus according to an embodiment of this application. For example, as shown in FIG. 10, the communication apparatus 1000 includes a transceiver module 1001 and a processing module 1002. The transceiver module 1001 is configured to indicate a transceiver function of the communication apparatus 1000, and the processing module 1002 is configured to perform a function other than the transceiver function of the communication apparatus 1000.

For ease of description, FIG. 10 shows only main components of the communication apparatus.

In some embodiments, the communication apparatus 1000 may be applicable to the communication systems shown in FIG. 6 and FIG. 7, and perform a function of the terminal in the method shown in FIG. 9.

For example:
The processing module 1002 is configured to control the transceiver module 1001 to measure an RS from a network device by using a first reference signal RS resource set, to obtain a measurement result of the RS. The processing module 1002 is further configured to input the measurement result into a neural network model, to determine a target RS resource set. The target RS resource set is determined from a candidate RS resource set, the candidate RS resource set is determined by the neural network model based on the measurement result, and the candidate RS resource set belongs to a second RS resource set. An RS transmitted by using the first RS resource set is the same as or different from an RS transmitted by using the second RS resource set.

In a possible design solution, the target RS resource set is determined from the candidate RS resource set based on a first threshold and information about the candidate RS resource set, and the first threshold is related to the information about the candidate RS resource set.

Optionally, that the candidate RS resource set is determined by the neural network model based on the measurement result of the RS is specifically as follows: The information about the candidate RS resource set is determined by the neural network model based on the measurement result of the RS.

Optionally, the information about the candidate RS resource set may include at least one of the following: a probability that each RS resource in the candidate RS resource set is an optimal RS resource, signal quality of each RS resource in the candidate RS resource set, or an angle of each RS resource in the candidate RS resource set. The angle of each RS resource in the candidate RS resource set is an angle difference between a transmission beam and a reception beam that correspond to the RS resource.

Further, information about the target RS resource set and the first threshold meet at least one of the following relationships: A probability that an RS resource in the target RS resource set is an optimal RS resource is greater than a probability represented by the first threshold, signal quality of an RS resource in the target RS resource set is greater than signal quality represented by the first threshold, or an angle of each RS resource in the RS resource set is less than an angle represented by the first threshold.

Optionally, the transceiver module 1001 is further configured to receive indication information from the network device, where the indication information indicates the first threshold.

Optionally, the first threshold may alternatively be pre-configured in the neural network model.

In a possible design solution, the transceiver module 1001 is further configured to send the information about the target RS resource set to the network device. The information about the target RS resource set includes at least one of the following: an identifier of the RS resource in the target RS resource set, the signal quality of the RS resource in the target RS resource set, or the angle of each RS resource in the RS resource set. The angle of each RS resource in the target RS resource set is an angle difference between a transmission beam and a reception beam that correspond to the RS resource.

In a possible design solution, there are a plurality of target RS resource sets, and the plurality of target RS resource sets may be separately configured in different time units for use.

For another example:

The processing module 1002 is configured to control the transceiver module 1001 to measure an RS from a network device by using a first reference signal RS resource set, to obtain a measurement result of the RS. The processing module 1002 is further configured to input the measurement result into a neural network model, to determine a target RS resource set group. The target RS resource set group includes a first target RS resource set corresponding to a first time unit and a second target RS resource set corresponding to a second time unit, and the first time unit is different from the second time unit. The first target RS resource set is determined from a first candidate RS resource set, and the second target RS resource set is determined from a second candidate RS resource set. The first candidate RS resource set and the second candidate RS resource set are determined by the neural network model based on the measurement result, and both the first candidate RS resource set and the second candidate RS resource set belong to a second RS resource set. An RS transmitted by using the first RS resource set is the same as or different from an RS transmitted by using the second RS resource set.

In a possible design solution, the first target RS resource set corresponding to the first time unit means that the first target RS resource set is configured in the first time unit for use.

In a possible design solution, the second target RS resource set corresponding to the second time unit means that the second target RS resource set is configured in the second time unit for use.

In a possible design solution, the first target RS resource set is determined from the first candidate RS resource set based on a first threshold and information about the first candidate RS resource set, and the first threshold is related to the information about the first candidate RS resource set.

Optionally, that the first candidate RS resource set is determined by the neural network model based on the measurement result of the RS is specifically as follows: The information about the first candidate RS resource set is determined by the neural network model based on the measurement result of the RS.

Optionally, the information about the first candidate RS resource set includes at least one of the following: a probability that each RS resource in the first candidate RS resource set is an optimal RS resource, signal quality of each RS resource in the first candidate RS resource set, or an angle of each RS resource in the first candidate RS resource set. The angle of each RS resource in the first candidate RS resource set is an angle difference between a transmission beam and a reception beam that correspond to the RS resource.

Further, information about the first target RS resource set and the first threshold meet at least one of the following relationships: A probability that an RS resource in the first target RS resource set is an optimal RS resource is greater than a probability represented by the first threshold, signal quality of an RS resource in the first target RS resource set is greater than signal quality represented by the first threshold, or an angle of each RS resource in the first RS resource set is less than an angle represented by the first threshold.

Optionally, the transceiver module 1001 is further configured to receive first indication information from the network device, where the first indication information indicates the first threshold.

Optionally, the first threshold may alternatively be pre-configured in the neural network model.

In a possible design solution, the transceiver module 1001 is further configured to send the information about the first target RS resource set to the network device. For example, the information about the first target RS resource set includes at least one of the following: an identifier of the RS resource in the first target RS resource set, the signal quality of the RS resource in the first target RS resource set, or the angle of each RS resource in the first RS resource set. The angle of each RS resource in the first target RS resource set is an angle difference between a transmission beam and a reception beam that correspond to the RS resource.

In a possible design solution, the second target RS resource set is determined from the second candidate RS resource set based on a second threshold and information about the second candidate RS resource set, and the second threshold is related to the information about the second candidate RS resource set.

Optionally, that the second candidate RS resource set is determined by the neural network model based on the measurement result of the RS is specifically as follows: The information about the second candidate RS resource set is determined by the neural network model based on the measurement result of the RS.

Optionally, the information about the second candidate RS resource set includes at least one of the following: a probability that each RS resource in the second candidate RS resource set is an optimal RS resource, signal quality of each RS resource in the second candidate RS resource set, or an angle of each RS resource in the second candidate RS resource set. The angle of each RS resource in the candidate RS resource set is an angle difference between a transmission beam and a reception beam that correspond to the RS resource.

Optionally, the transceiver module 1001 is further configured to receive second indication information from the network device, where the second indication information indicates the second threshold.

Optionally, the second threshold may alternatively be pre-configured in the neural network model.

In a possible design solution, the transceiver module 1001 is further configured to send information about the second target RS resource set to the network device. For example, the information about the second target RS resource set includes at least one of the following: an identifier of an RS resource in the second target RS resource set, signal quality of an RS resource in the second target RS resource set, or an angle of each RS resource in the second RS resource set. The angle of each RS resource in the second target RS resource set is an angle difference between a transmission beam and a reception beam that correspond to the RS resource.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10), and the storage module stores a program or instructions. When the processing module 1002 executes the program or the instructions, the communication apparatus 1000 is enabled to perform a function of the terminal in the method in FIG. 9.

It may be understood that the communication apparatus 1000 may be a terminal, may be a chip (system) or another part or component that may be disposed in a terminal, or may be an apparatus including a terminal. This is not limited in this application.

In addition, for technical effects of the communication apparatus 1000, refer to the technical effects of the communication method shown in FIG. 9. Details are not described herein again.

In some other embodiments, the communication apparatus 1000 may be applicable to the communication systems shown in FIG. 6 and FIG. 7, and perform a function of the network device in the method shown in FIG. 10.

For example:

The transceiver module 1001 is configured to: send an RS to a terminal by using a first reference signal RS resource set, and receive a measurement result that is of the RS and that is fed back by the terminal. In this way, the processing module 1002 is configured to input the measurement result into a neural network model, to determine a target RS resource set. The target RS resource set is determined from a candidate RS resource set, the candidate RS resource set is determined by the neural network model based on the measurement result, the candidate RS resource set belongs to a second RS resource set, and an RS transmitted by using the first RS resource set is the same as or different from an RS transmitted by using the second RS resource set.

In a possible design solution, the target RS resource set is determined from the candidate RS resource set based on a first threshold and information about the candidate RS resource set, and the first threshold is related to the information about the candidate RS resource set.

Optionally, that the candidate RS resource set is determined by the neural network model based on the measurement result is specifically as follows: The information about the candidate RS resource set is determined by the neural network model based on the measurement result.

Further, the information about the candidate RS resource set includes at least one of the following: a probability that each RS resource in the candidate RS resource set is an optimal RS resource, signal quality of each RS resource in the candidate RS resource set, or an angle of each RS resource in the candidate RS resource set. The angle of each RS resource in the candidate RS resource set is an angle difference between a transmission beam and a reception beam that correspond to the RS resource.

Further, information about the target RS resource set and the first threshold meet at least one of the following relationships: A probability that an RS resource in the target RS resource set is an optimal RS resource is greater than a probability represented by the first threshold, signal quality of an RS resource in the target RS resource set is greater than signal quality represented by the first threshold, or an angle of each RS resource in the RS resource set is less than an angle represented by the first threshold.

Optionally, the first threshold may be pre-configured in the neural network model.

In a possible design solution, the transceiver module 1001 is further configured to send the target RS resource set to the terminal.

In a possible design solution, there are a plurality of target RS resource sets, and the plurality of target RS resource sets are configured in different time units for use.

In a possible design solution, the measurement result of the RS is all measurement results or a part of measurement results.

For another example:

The transceiver module 1001 is configured to: send an RS to a terminal by using a first reference signal RS resource set, and receive a measurement result that is of the RS and that is fed back by the terminal. In this way, the processing module 1002 is configured to input the measurement result into a neural network model, to determine a target RS resource set group. The target RS resource set group includes a first target RS resource set corresponding to a first time unit and a second target RS resource set corresponding to a second time unit, and the first time unit is different from the second time unit. The first target RS resource set is determined from a first candidate RS resource set, and the second target RS resource set is determined from a second candidate RS resource set. The first candidate RS resource set and the second candidate RS resource set are determined by the neural network model based on the measurement result, and both the first candidate RS resource set and the second candidate RS resource set belong to a second RS resource set. An RS transmitted by using the first RS resource set is the same as or different from an RS transmitted by using the second RS resource set.

In a possible design solution, the first target RS resource set corresponding to the first time unit means that the first target RS resource set is configured in the first time unit for use.

In a possible design solution, the second target RS resource set corresponding to the second time unit means that the second target RS resource set is configured in the second time unit for use.

In a possible design solution, the first target RS resource set is determined from the first candidate RS resource set based on a first threshold and information about the first candidate RS resource set, and the first threshold is related to the information about the first candidate RS resource set.

Optionally, that the first candidate RS resource set is determined by the neural network model based on the measurement result of the RS is specifically as follows: The information about the first candidate RS resource set is determined by the neural network model based on the measurement result of the RS.

Further, the information about the first candidate RS resource set includes at least one of the following: a probability that each RS resource in the first candidate RS resource set is an optimal RS resource, signal quality of each RS resource in the first candidate RS resource set, or an angle of each RS resource in the first candidate RS resource set. The angle of each RS resource in the first candidate RS resource set is an angle difference between a transmission beam and a reception beam that correspond to the RS resource.

Further, information about the first target RS resource set and the first threshold meet at least one of the following relationships: A probability that an RS resource in the first target RS resource set is an optimal RS resource is greater than a probability represented by the first threshold, signal quality of an RS resource in the first target RS resource set is greater than signal quality represented by the first threshold, or an angle of each RS resource in the first RS resource set is less than an angle represented by the first threshold.

Optionally, the first threshold may be pre-configured in the neural network model.

In a possible design solution, the transceiver module 1001 is further configured to send the first target RS resource set to the terminal.

In a possible design solution, the second target RS resource set is determined from the second candidate RS resource set based on a second threshold and information about the second candidate RS resource set, and the second threshold is related to the information about the second candidate RS resource set.

Optionally, that the second candidate RS resource set is determined by the neural network model based on the measurement result of the RS is specifically as follows: The information about the second candidate RS resource set is determined by the neural network model based on the measurement result of the RS.

Further, the information about the second candidate RS resource set includes at least one of the following: a probability that each RS resource in the second candidate RS resource set is an optimal RS resource, signal quality of each RS resource in the second candidate RS resource set, or an angle of each RS resource in the second candidate RS resource set. The angle of each RS resource in the second candidate RS resource set is an angle difference between a transmission beam and a reception beam that correspond to the RS resource.

Further, information about the second target RS resource set and the second threshold meet at least one of the following relationships: A probability that an RS resource in the second target RS resource set is an optimal RS resource is greater than a probability represented by the second threshold, signal quality of an RS resource in the second target RS resource set is greater than signal quality represented by the second threshold, or an angle of each RS resource in the second RS resource set is less than an angle represented by the second threshold.

Optionally, the second threshold may be pre-configured in the neural network model.

In a possible design solution, the transceiver module 1001 is further configured to send the second target RS resource set to the terminal.

In a possible design solution, the measurement result of the RS is all measurement results or a part of measurement results.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10), and the storage module stores a program or instructions. When the processing module 1002 executes the program or the instructions, the communication apparatus 1000 is enabled to perform a function of the network device in the method in FIG. 10.

It may be understood that the communication apparatus 1000 may be a network device, may be a chip (system) or another part or component that may be disposed in a network device, or may be an apparatus including a network device. This is not limited in this application.

In addition, for technical effects of the communication apparatus 1000, refer to the technical effects of the communication method shown in FIG. 10. Details are not described herein again.

FIG. 11 is a diagram 2 of a structure of a communication apparatus according to an embodiment of this application. For example, the communication apparatus may be a terminal, or may be a chip (system) or another part or component that may be disposed in a terminal. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus. In addition, the communication apparatus 1100 may also be a chip, for example, include the processor 1101. In this case, the transceiver may be an output/input interface of the chip.

The following describes components of the communication apparatus 1100 in detail with reference to FIG. 11.

The processor 1101 is a control center of the communication apparatus 1100, and may be one processor, or may be a general term of a plurality of processing elements. For example, the processor 1101 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1101 may perform various functions of the communication apparatus 1100 by running or executing a software program stored in the memory 1102 and invoking data stored in the memory 1102, for example, perform the foregoing communication method.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include a plurality of processors, for example, the processor 1101 and a processor 1104 shown in FIG. 11. Each of the processors may be a single-core processor (single-CPU) or a multi-core processor (multi-CPU). The processor herein may be one or more devices, circuits, and/or processing cores configured to process data (for example, a computer program or instructions).

The memory 1102 is configured to store a software program for performing the solutions in this application, and the processor 1101 controls execution. For a specific implementation, refer to the foregoing method embodiments. Details are not described herein again.

Optionally, the memory 1102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited thereto. The memory 1102 may be integrated with the processor 1101, or may exist independently, and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal, and the transceiver 1103 may be configured to communicate with a network device or communicate with another terminal device. For another example, the communication apparatus 1100 is a network device, and the transceiver 1103 may be configured to communicate with a terminal or communicate with another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently, and is coupled to the processor 1101 through an interface circuit (not shown in FIG. 11) of the communication apparatus 1100. This is not specifically limited in this embodiment of this application.

It may be understood that a structure of the communication apparatus 1100 shown in FIG. 11 does not constitute a limitation on the communication apparatus. An actual communication apparatus may include more or fewer parts than those shown in the figure, or combine some parts, or have different part arrangement.

In addition, for technical effects of the communication apparatus 1100, refer to the technical effects of the method in the foregoing method embodiments. Details are not described herein again.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer programs or instructions may be stored in a computer-readable storage medium or may be transmitted from a computer-readable storage medium to another computer-readable storage medium. For example, the computer programs or instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

    measuring a reference signal RS from a network device by using a first RS resource set, to obtain a measurement result of the RS; and
    inputting the measurement result into a neural network model, to determine a target RS resource set, wherein the target RS resource set is determined from a candidate RS resource set, the candidate RS resource set is determined by the neural network model based on the measurement result, the candidate RS resource set belongs to a second RS resource set, and an RS transmitted by using the first RS resource set is the same as or different from an RS transmitted by using the second RS resource set.

2. The method according to claim 1, wherein the target RS resource set is determined from the candidate RS resource set based on a first threshold and information about the candidate RS resource set, and the first threshold is related to the information about the candidate RS resource set.

3. The method according to claim 2, wherein that the candidate RS resource set is determined by the neural network model based on the measurement result is specifically as follows: the information about the candidate RS resource set is determined by the neural network model based on the measurement result.

4. The method according to claim 3, wherein the information about the candidate RS resource set comprises at least one of the following: a probability that each RS resource in the candidate RS resource set is an optimal RS resource, signal quality of each RS resource in the candidate RS resource set, or an angle of each RS resource in the candidate RS resource set, wherein the angle of each RS resource in the candidate RS resource set is an angle difference between a transmission beam and a reception beam that correspond to the RS resource.

5. The method according to claim 4, wherein information about the target RS resource set and the first threshold meet at least one of the following relationships: a probability that an RS resource in the target RS resource set is an optimal RS resource is greater than a probability represented by the first threshold, signal quality of an RS resource in the target RS resource set is greater than signal quality represented by the first threshold, or an angle of each RS resource in the RS resource set is less than an angle represented by the first threshold.

6. The method according to any one of claims 2 to 5, wherein the method further comprises:
receiving indication information from the network device, wherein the indication information indicates the first threshold.

7. The method according to any one of claims 2 to 5, wherein the first threshold is pre-configured in the neural network model.

8. The method according to any one of claims 2 to 7, wherein the method further comprises:
sending the information about the target RS resource set to the network device.

9. The method according to claim 8, wherein the information about the target RS resource set comprises at least one of the following: an identifier of the RS resource in the target RS resource set, the signal quality of the RS resource in the target RS resource set, or the angle of each RS resource in the RS resource set, wherein the angle of each RS resource in the target RS resource set is an angle difference between a transmission beam and a reception beam that correspond to the RS resource.

10. The method according to any one of claims 1 to 9, wherein there are a plurality of target RS resource sets, and the plurality of target RS resource sets are configured in different time units for use.

11. A communication method, wherein the method comprises:

sending an RS to a terminal by using a first reference signal RS resource set;
receiving a measurement result that is of the RS and that is fed back by the terminal; and
inputting the measurement result into a neural network model, to determine a target RS resource set, wherein the target RS resource set is determined from a candidate RS resource set, the candidate RS resource set is determined by the neural network model based on the measurement result, the candidate RS resource set belongs to a second RS resource set, and an RS transmitted by using the first RS resource set is the same as or different from an RS transmitted by using the second RS resource set.

12. The method according to claim 11, wherein the target RS resource set is determined from the candidate RS resource set based on a first threshold and information about the candidate RS resource set, and the first threshold is related to the information about the candidate RS resource set.

13. The method according to claim 12, wherein that the candidate RS resource set is determined by the neural network model based on the measurement result is specifically as follows: the information about the candidate RS resource set is determined by the neural network model based on the measurement result.

14. The method according to claim 13, wherein the information about the candidate RS resource set comprises at least one of the following: a probability that each RS resource in the candidate RS resource set is an optimal RS resource, signal quality of each RS resource in the candidate RS resource set, or an angle of each RS resource in the candidate RS resource set, wherein the angle of each RS resource in the candidate RS resource set is an angle difference between a transmission beam and a reception beam that correspond to the RS resource.

15. The method according to claim 14, wherein information about the target RS resource set and the first threshold meet at least one of the following relationships: a probability that an RS resource in the target RS resource set is an optimal RS resource is greater than a probability represented by the first threshold, signal quality of an RS resource in the target RS resource set is greater than signal quality represented by the first threshold, or an angle of each RS resource in the RS resource set is less than an angle represented by the first threshold.

16. The method according to any one of claims 12 to 15, wherein the first threshold is pre-configured in the neural network model.

17. The method according to any one of claims 11 to 16, wherein the method further comprises:
sending the target RS resource set to the terminal.

18. The method according to any one of claims 11 to 17, wherein there are a plurality of target RS resource sets, and the plurality of target RS resource sets are configured in different time units for use.

19. The method according to any one of claims 11 to 18, wherein the measurement result of the RS is all measurement results or a part of measurement results.

20. A communication apparatus, wherein the apparatus comprises a module configured to perform the method according to any one of claims 1 to 10.

21. A communication apparatus, wherein the apparatus comprises a module configured to perform the method according to any one of claims 11 to 19.

22. A communication apparatus, wherein the communication apparatus comprises at least one processor and a memory, and the memory is configured to store computer instructions; and when the at least one processor executes the instructions, the communication apparatus is enabled to perform the method according to any one of claims 11 to 19.

23. A communication system, wherein the communication system comprises a terminal and a network device, the terminal is configured to perform the method according to any one of claims 1 to 10, and the network device is configured to perform the method according to any one of claims 11 to 19.

24. A computer-readable storage medium, wherein the computer-readable storage medium comprises a computer program or instructions; and when the computer program or the instructions are run on a computer, the computer is enabled to perform the method according to any one of claims 1 to 19.

FIG. 1

First phase

Second phase

FIG. 2

$$y = f\left(\sum_{i=0}^{n} d_i x_i + b\right)$$

FIG. 3

Weight

Neuron

Input layer

Hidden layer

Output layer

FIG. 4

FIG. 5

FIG. 6

FIG. 7

EP 4 661 478 A1

| Terminal | | Network device |

S801: Measure an RS from the network device by using a first RS resource set, to obtain a measurement result of the RS

S802: Input the measurement result of the RS into a neural network model, to determine a target RS resource set

S803: Information about the target RS resource set

FIG. 8

| Terminal | | Network device |

S901: Send an RS to the terminal by using a first reference signal RS resource set

S902: Measurement result of the RS

S903: Input the measurement result into a neural network model, to determine a target RS resource set

S904: Target RS resource set

FIG. 9

Communication apparatus 1000

Processing module

1002

Transceiver module

1001

FIG. 10

Communication apparatus 1100

1101

Processor

CPU 0

CPU 1

1104

Processor

CPU 0

CPU 1

1102

Memory

1103

Transceiver

FIG. 11

## INTERNATIONAL SEARCH REPORT

| International application No. |
|---|
| **PCT/CN2024/072617** |

**A.    CLASSIFICATION OF SUBJECT MATTER**

H04W24/10(2009.01)i

According to International Patent Classification (IPC) or to both national classification and IPC

**B.    FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, ENTXT, 3GPP: 神经网络, 波束, 参考信号, 测量, 预测, 推理, 阈值, 门限, RS, measure, beam, model, AI, DNN, ANN, predict, neural, network, threshold

**C.    DOCUMENTS CONSIDERED TO BE RELEVANT**

| Category* | Citation of document, with indication, where appropriate, of the relevant passages | Relevant to claim No. |
|---|---|---|
| X | WO 2022174461 A1 (BEIJING XIAOMI MOBILE SOFTWARE CO., LTD.) 25 August 2022 (2022-08-25) description, page 10, line 7 to page 14, second-to-last line | 1-10, 20, 24 |
| Y | WO 2022174461 A1 (BEIJING XIAOMI MOBILE SOFTWARE CO., LTD.) 25 August 2022 (2022-08-25) description, page 10, line 7 to page 14, second-to-last line | 11-19, 21-24 |
| Y | CN 114938712 A (BEIJING XIAOMI MOBILE SOFTWARE CO., LTD.) 23 August 2022 (2022-08-23) description, paragraphs 57-76 | 11-19, 21-24 |
| A | CN 114222324 A (CHENGDU HUAWEI TECHNOLOGIES CO., LTD.) 22 March 2022 (2022-03-22) entire document | 1-24 |
| A | CN 113498583 A (QUALCOMM INC.) 12 October 2021 (2021-10-12) entire document | 1-24 |
| A | US 2022190883 A1 (NOKIA TECHNOLOGIES OY) 16 June 2022 (2022-06-16) entire document | 1-24 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 March 2024** | **18 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

EP 4 661 478 A1

## INTERNATIONAL SEARCH REPORT
### Information on patent family members

International application No.

**PCT/CN2024/072617**

| Patent document cited in search report | | | Publication date (day/month/year) | Patent family member(s) | | | Publication date (day/month/year) |
|---|---|---|---|---|---|---|---|
| WO | 2022174461 | A1 | 25 August 2022 | US | 2024007890 | A1 | 04 January 2024 |
| | | | | EP | 4297465 | A1 | 27 December 2023 |
| | | | | CN | 115244965 | A | 25 October 2022 |
| CN | 114938712 | A | 23 August 2022 | WO | 2023197226 | A1 | 19 October 2023 |
| CN | 114222324 | A | 22 March 2022 | WO | 2020029942 | A1 | 13 February 2020 |
| | | | | CN | 110831047 | A | 21 February 2020 |
| CN | 113498583 | A | 12 October 2021 | EP | 3921951 | A1 | 15 December 2021 |
| | | | | US | 2020259545 | A1 | 13 August 2020 |
| | | | | WO | 2020163086 | A1 | 13 August 2020 |
| US | 2022190883 | A1 | 16 June 2022 | WO | 2020214168 | A1 | 22 October 2020 |
| | | | | EP | 3956992 | A1 | 23 February 2022 |
| | | | | CN | 113994598 | A | 28 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310160189X